# EUROPEAN PATENT APPLICATION

(11) **EP 4 847 311 A1**
(43) Date of publication of application: **02.12.2026**
(21) Application number: 26182023.7
(22) Date of filing: 29.05.2026
(51) Int. Cl.: B60N 2/68, B60N 2/22, B60N 2/64, B60N 2/427

(54) **SEAT BACKREST, AUTOMOTIVE SEAT AND MOTOR VEHICLE**

(30) Priority: 29.05.2025 CN 202510715918
(71) Applicant: Adient (Chongqing) Automotive Components Co., Ltd., Liangjiang New Area, Chongqing 401122 (CN)
(72) Inventor: ZHANG, Bin, Chongqing, Liangjiang New Area, 401122 (CN); TAN, Muxing, Chongqing, Liangjiang New Area, 401122 (CN); JIA, Wei, Chongqing, Liangjiang New Area, 401122 (CN); LI, Qingmao, Chongqing, Liangjiang New Area, 401122 (CN); XIN, Yi, Chongqing, Liangjiang New Area, 401122 (CN)
(74) Representative: Liedtke & Partner Patentanwälte

(57) **Abstract**

The present application provides a seat backrest, an automotive seat and a motor vehicle, the seat backrest comprising: a base plate (10); multiple backrest modules (20), mounted on the base plate (10) and combined to form a seat backrest support; wherein at least a portion of the base plate (10) is elastic, and at least one of the backrest modules (20) adjusts its attitude as the base plate (10) deforms elastically. In the present application, the elasticity of the base plate (10) allows the seat backrest to better fit the curves of the back of the human body, thereby improving the user experience.

## Description

### Technical field

The present application relates to the technical field of seats, in particular to a seat backrest, an automotive seat and a motor vehicle.

### Background Art

At present, seat backrests mainly comprise a frame, a foam body and a covering. The foam body is installed on the frame, and the covering wraps the entire frame and the foam body to form the seat backrest. However, the fitting of the seat backrest to the back of the human body mainly relies on the ergonomic design of the seat backrest and deformation of the foam body. This is unable to achieve better fitting of the seat backrest to the curves of different human bodies.

### Summary of the Invention

The present application provides a seat backrest, an automotive seat and a motor vehicle, with the intention of solving the above technical problem.

In a first aspect, the present application provides a seat backrest, comprising:
a base plate;
multiple backrest modules, mounted on the base plate and combined to form seat backrest support;
wherein at least a portion of the base plate is elastic, and at least one of the backrest modules adjusts its attitude as the base plate deforms elastically.

In some embodiments, at least a partial region of the base plate can be depressed in a direction away from the multiple backrest modules, with at least one of the backrest modules adjusting its attitude as the base plate is depressed.

In some embodiments, when at least a partial region of the base plate experiences depression deformation, at least one of the backrest modules is deflected toward a depressed region of the base plate.

In some embodiments, at least a partial region of the base plate located close to a center axis can be depressed in a direction away from the multiple backrest modules.

In some embodiments, the base plate has at least one elastic region and at least one rigid region;
any elastic region has a smaller elastic modulus than any rigid region.

In some embodiments, at least one of the backrest modules has at least one first connecting part and at least one second connecting part;
at least one first connecting part is connected to a first object, and at least one second connecting part is connected to a second object;
wherein at least one of the first object and the second object is the elastic region or the rigid region of the base plate.

In some embodiments, the first connecting part of at least one of the backrest modules is rotatably connected to the first object, and the second connecting part is elastically connected to the second object.

In some embodiments, at least one of the backrest modules comprises a first support part and a second support part;
the first support part extends in a first direction, and the second support part extends in a second direction;
wherein the first direction is not parallel to the second direction, and the first connecting part used for rotatable connection is located at a boundary between the first support part and the second support part.

In some embodiments, the second connecting part of at least one of the backrest modules is located at a side of the first support part that faces toward the base plate; or the second connecting part of at least one of the backrest modules is located at a side of the second support part that faces toward the base plate.

In some embodiments, the first connecting part of at least one of the backrest modules is located at a side of the second connecting part that is remote from the center of the base plate, and the second connecting part is connected to the second object in such a way as to be elastically compressible.

In some embodiments, the first connecting part of at least one of the backrest modules is located at a side of the second connecting part that is close to the center of the base plate, and the second connecting part is connected to the second object in such a way as to be elastically stretchable.

In some embodiments, the first connecting part of at least one of the backrest modules is connected to the rigid region of the base plate, and the second connecting part is connected to the elastic region of the base plate.

In some embodiments, the first connecting part of at least one of the backrest modules is connected to the rigid region of the base plate, and the second connecting part is connected to the rigid region of the base plate.

In some embodiments, the first connecting part of at least one of the backrest modules is connected to the elastic region of the base plate, and the second connecting part is connected to the elastic region of the base plate.

In some embodiments, the first connecting part of at least one of the backrest modules is rotatably connected to the base plate, and the second connecting part is elastically connected to the base plate.

In some embodiments, the seat backrest further comprises a backrest frame, the base plate being fixed to the backrest frame;
the first connecting part of at least one of the backrest modules is connected to the backrest frame, and the second connecting part is connected to the elastic region or the rigid region of the base plate.

In some embodiments, the first connecting part of at least one of the backrest modules is rotatably connected to the backrest frame, and the second connecting part is elastically connected to the elastic region of the base plate.

In some embodiments, the first connecting part of at least one of the backrest modules is elastically connected to the backrest frame, and the second connecting part is rotatably connected to the elastic region of the base plate.

In some embodiments, at least a portion of the rigid region of the base plate is fixedly connected to the backrest frame.

In some embodiments, a first hinge connection component is connected between the first connecting part of at least one of the backrest modules and the first object, and a first elastic component is connected between the second connecting part and the second object.

In some embodiments, a first hinge connection component is connected between the first connecting part of at least one of the backrest modules and the first object, and a second hinge connection component is connected between the second connecting part and the second object.

In some embodiments, a first elastic component is connected between the first connecting part of at least one of the backrest modules and the first object, and a second elastic component is connected between at least one second connecting part and the second object.

In some embodiments, the base plate has a first elastic region and a second elastic region;
the first elastic region and the second elastic region are respectively located at two sides of a center axis of the base plate.

In some embodiments, the base plate has a first rigid region;
the first rigid region is arranged along the center axis of the base plate.

In some embodiments, the base plate has a second rigid region;
the second rigid region is arranged along an edge of the base plate.

In some embodiments, the base plate has a first rigid region and a first elastic region; the first rigid region is arranged along an edge of the base plate and surrounds the first elastic region.

In some embodiments, the base plate has a first rigid region and multiple first elastic regions;
the first rigid region is arranged along an edge of the base plate, and the multiple first elastic regions are located in a ring enclosed by the first rigid region.

In some embodiments, the base plate has a first rigid region and a first elastic region; the first elastic region is arranged along an edge region of the base plate, and the first rigid region is arranged in a ring shape along an inner periphery of the first elastic region.

In some embodiments, the base plate also has a second elastic region;
the first rigid region surrounds the second elastic region.

In some embodiments, the elastic region of the base plate is provided with multiple first through-slots penetrating the base plate.

In some embodiments, the elastic region of the base plate is provided with multiple first grooves.

In some embodiments, the elastic region of the base plate is provided with a second through-slot corresponding in size to the elastic region, and multiple elastic members are mounted in the second through-slot.

In some embodiments, the multiple backrest modules comprise a first side wing support module and a second side wing support module;
the first side wing support module and the second side wing support module are respectively mounted at two sides of a center axis of the base plate.

In some embodiments, the multiple backrest modules comprise multiple first side wing secondary support modules and multiple second side wing secondary support modules;
wherein the multiple first side wing secondary support modules and the multiple second side wing secondary support modules are respectively mounted at two sides of a center axis of the base plate.

In some embodiments, the multiple backrest modules further comprise a first end support module;
the first end support module is mounted at a first end of the base plate in the direction of the center axis.

In some embodiments, the multiple backrest modules further comprise a second end support module;
the second end support module is mounted at a second end of the base plate in the direction of the center axis.

In some embodiments, each of the backrest modules comprises a backrest support plate.

In some embodiments, each of the backrest modules comprises a backrest support plate and a backrest foam body, the backrest foam body being mounted on a side of the backrest support plate that faces away from the base plate.

In some embodiments, each of the backrest modules comprises a backrest support plate;
at least two of the backrest support plates are configured to have the same backrest foam body mounted thereon.

In a second aspect, the present application provides an automotive seat, comprising the seat backrest according to the first aspect.

In a third aspect, the present application provides a motor vehicle, comprising the automotive seat according to the second aspect.

In embodiments of the present application, since at least a portion of the base plate is elastic, at least one of the backrest modules can adjust its attitude as the base plate deforms.

Firstly, the elasticity of the base plate allows the seat backrest to better fit the curves of the back of the human body, thereby improving the user experience.

Secondly, if the motor vehicle is involved in an accident, the elasticity of the base plate enables more deformation to occur, thereby providing effective cushioning for the driver or passenger, so as to realize motor vehicle collision protection.

Thirdly, to design an automotive seat with novel appearance and functionality, it is only necessary to change the shape and layout design of the multiple backrest modules; this helps to increase the speed of development and iteration of automotive seats, so as to meet the current demand for fast replacement of motor vehicle generations.

Fourthly, if a user wishes to configure the seat or perform seat maintenance according to personal preference, all that need be done is to replace the multiple backrest modules with others of a different shape and/or layout; this not only reduces the cost and difficulty of maintenance, but also enables personalized configuration of the seat backrest according to different user demands.

### Brief Description of the Drawings

To explain the technical solutions in embodiments of the present application more clearly, the drawings that need to be used in describing the embodiments are described briefly below. Clearly, the drawings in the description below are mere some embodiments of the present invention. Those skilled in the art could obtain other drawings based on these drawings without inventive effort.
- Fig. 1: shows an exploded schematic drawing of a seat backrest in embodiments of the present application.
- Fig. 2: shows a schematic drawing of a base plate in embodiments of the present application.
- Fig. 3: shows another schematic drawing of a base plate in embodiments of the present application.
- Fig. 4: shows another schematic drawing of a base plate in embodiments of the present application.
- Fig. 5: shows another schematic drawing of a base plate in embodiments of the present application.
- Fig. 6: shows another schematic drawing of a base plate in embodiments of the present application.
- Fig. 7: shows another schematic drawing of a base plate in embodiments of the present application.
- Fig. 8: shows another schematic drawing of a base plate in embodiments of the present application.
- Fig. 9: shows another schematic drawing of a base plate in embodiments of the present application.
- Fig. 10: shows another schematic drawing of a base plate in embodiments of the present application.
- Fig. 11: shows another schematic drawing of a base plate in embodiments of the present application.
- Fig. 12: shows another schematic drawing of a base plate in embodiments of the present application.
- Fig. 13: shows another schematic drawing of a base plate in embodiments of the present application.
- Fig. 14: shows a schematic layout drawing of multiple backrest modules in embodiments of the present application.
- Fig. 15: shows a structural schematic drawing of backrest modules in embodiments of the present application.
- Fig. 16: shows another structural schematic drawing of backrest modules in embodiments of the present application.
- Fig. 17: shows another structural schematic drawing of backrest modules in embodiments of the present application.
- Fig. 18: shows another structural schematic drawing of backrest modules in embodiments of the present application.
- Fig. 19: shows another structural schematic drawing of backrest modules in embodiments of the present application.
- Fig. 20: shows another structural schematic drawing of backrest modules in embodiments of the present application.
- Fig. 21: shows another structural schematic drawing of backrest modules in embodiments of the present application.
- Fig. 22: shows a schematic drawing of multiple backrest modules mounted on a base plate in embodiments of the present application.
- Fig. 23: shows another schematic drawing of multiple backrest modules mounted on a base plate in embodiments of the present application.
- Fig. 24: shows another schematic drawing of multiple backrest modules mounted on a base plate in embodiments of the present application.
- Fig. 25: shows another schematic drawing of multiple backrest modules mounted on a base plate in embodiments of the present application.
- Fig. 26: shows another schematic drawing of multiple backrest modules mounted on a base plate in embodiments of the present application.
- Fig. 27: shows another schematic drawing of multiple backrest modules mounted on a base plate in embodiments of the present application.
- Fig. 28: shows another schematic drawing of multiple backrest modules mounted on a base plate in embodiments of the present application.
- Fig. 29: shows a schematic drawing of a side of multiple backrest modules facing a base plate in embodiments of the present application.
- Fig. 30: shows a schematic top view of backrest modules in embodiments of the present application.
- Fig. 31: shows a sectional schematic drawing of positions of connection of backrest modules to a base plate in the present application.
- Fig. 32: shows another sectional schematic drawing of positions of connection of backrest modules to a base plate in the present application.
- Fig. 33: shows another sectional schematic drawing of positions of connection of backrest modules to a base plate in the present application.
- Fig. 34: shows another sectional schematic drawing of positions of connection of backrest modules to a base plate in the present application.
- Fig. 35: shows another sectional schematic drawing of positions of connection of backrest modules to a base plate in the present application.
- Fig. 36: shows another sectional schematic drawing of positions of connection of backrest modules to a base plate in the present application.
- Fig. 37: shows another sectional schematic drawing of positions of connection of backrest modules to a base plate in the present application.
- Fig. 38: shows a sectional schematic drawing of positions of connection of backrest modules to a base plate when multiple backrest modules are in a free state in embodiments of the present application.
- Fig. 39: shows a sectional schematic drawing of positions of connection of backrest modules to a base plate when multiple backrest modules are under pressure in embodiments of the present application.
- Fig. 40: shows another exploded schematic drawing of a seat backrest in embodiments of the present application.
- Fig. 41: shows a sectional schematic drawing of positions of connection of backrest modules to a base plate and a backrest frame in embodiments of the present application.
- Fig. 42: shows another sectional schematic drawing of positions of connection of backrest modules to a base plate and a backrest frame in embodiments of the present application.
- Fig. 43: shows another sectional schematic drawing of positions of connection of backrest modules to a base plate and a backrest frame in embodiments of the present application.
- Fig. 44: shows a structural schematic drawing of a backrest frame and an elastic base plate in embodiments of the present application.
- Fig. 45: shows another structural schematic drawing of a backrest frame and a base plate in embodiments of the present application.
- Fig. 46: shows another structural schematic drawing of a backrest frame and a base plate in embodiments of the present application.
- Fig. 47: shows another sectional schematic drawing of positions of connection of backrest modules to a base plate in embodiments of the present application.
- Fig. 48: shows another sectional schematic drawing of positions of connection of backrest modules to a base plate in embodiments of the present application.
- Fig. 49: shows another sectional schematic drawing of positions of connection of backrest modules to a base plate in embodiments of the present application.
- Fig. 50: shows another exploded schematic drawing of a seat backrest in embodiments of the present application.

### Detailed Description of the Invention

The technical solutions in embodiments of the present application are described clearly and completely below with reference to the drawings in embodiments of the present application. Obviously, the embodiments described are merely some, not all of the embodiments of the present invention. All other embodiments obtained by those skilled in the art on the basis of the embodiments in the present invention without inventive effort are included in the scope of protection of the present invention.

In the description of the present invention, it should be understood that the orientational or positional relationships indicated by terms such as "center", "longitudinal", "transverse", "length", "width", "thickness", "upper", "lower", "front", "rear", "left", "right", "vertical", "horizontal", "top", "bottom", "inner" and "outer" are based on the orientational or positional relationships shown in the drawings, and are merely intended to facilitate and simplify description of the present invention, without indicating or implying that the device or element in question must have a specific orientation or be constructed and operated in a specific orientation, so should not be construed as limiting the present invention. In addition, the terms "first" and "second" are merely used for descriptive purposes and should not be construed as indicating or implying relative importance or implicitly specifying the number of the technical feature in question. Thus, a feature defined with "first" and "second" may explicitly or implicitly include one or more of said feature. In the description of the present invention, the meaning of "multiple" is two or more, unless otherwise explicitly and specifically defined.

In the present application, the word "exemplary" is used to mean "used as an example, instance or illustration". Any embodiment described in the present application as "exemplary" is not necessarily interpreted as being more preferred or more advantageous than other embodiments. The following description is given to enable any person skilled in the art to realize and use the present invention. Details are set out in the description below for explanatory purposes. Clearly, as those skilled in the art will recognize, the present invention could also be realized without these specific details. In other examples, well known structures and processes will not be expounded in detail, to avoid obfuscating the description of the present invention with unnecessary details. Thus, the present invention is not intended to be limited to the embodiments shown, but is consistent with the broadest scope in keeping with the principles and features disclosed in the present application.

At present, automotive seat backrests mainly comprise a frame, a foam body and a covering. The foam body is installed on the frame, and the covering wraps the entire frame and the foam body to form the seat backrest. However, the fitting of the automotive seat backrest to the human body mainly relies on the ergonomic design of the seat backrest and deformation of the foam body. This is unable to achieve better fitting of the seat backrest to the curves of the human body.

At the same time, to guarantee the user's ride experience, the foam body should not deform too much or too little under the same compressive force. If the foam body deforms too much, the user will feel that the cushion is too "soft" and feel uncomfortable. If the foam body deforms too little, the user will feel that the cushion is too "hard" and feel uncomfortable. Since the resistance to unit deformation of the foam body increases exponentially as deformation increases, if a motor vehicle is involved in an accident, the foam body inside the seat backrest is unable to deform much to effectively cushion and thus protect the driver or passenger.

In addition, at present, with new energy vehicles being iterated rapidly, automotive seats must respond to the demands of automotive manufacturers with regard to rapid generation replacement. However, designing a new automotive seat requires a long process of research, development and design, structural strength testing and product verification, etc. Conventional automotive seat structure has also limited the speed with which automotive seat products can be developed and iterated.

Furthermore, in the current automotive seat market, user demand for seat personalization is steadily increasing; more and more users wish to be able to configure a seat according to personal preference, or replace it with a seat of a different shape or color during use, adding or removing certain functional configurations of the seat (heating, ventilation, massage, etc.). However, the appearance and functional configuration of automotive seats currently on the market are generally fixed at manufacture, and are difficult to change quickly and flexibly according to the personal preferences of users, so consumer demand for diversification cannot be met.

Thus, the conventional design of existing automotive seat backrests, featuring a frame, a foam body and a covering, has drawbacks such as the need to improve user experience, poor safety performance, slow development and iteration, and inability to achieve user personalization. Thus, embodiments of the present application provide a seat backrest, an automotive seat and a motor vehicle, which are described in detail individually below.

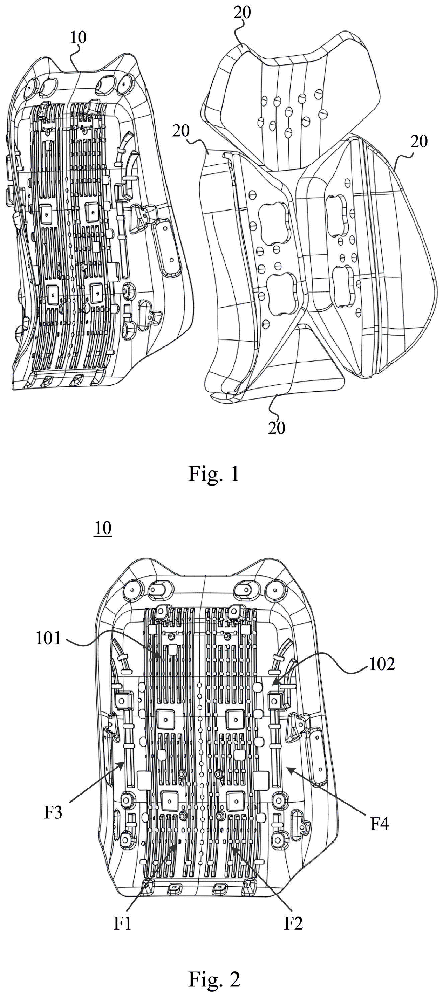

Firstly, referring to Fig. 1, Fig. 1 shows an exploded schematic drawing of a seat backrest in embodiments of the present application, wherein the seat backrest comprises a base plate 10 and multiple backrest modules 20.

Specifically, the base plate 10 can provide a foundation for mounting the backrest module 20, such that a complete connection structure (e.g. a first connecting part 201 and a second connecting part 202 mentioned below) or a partial connection structure (e.g. the first connecting part 201 or the second connecting part 202 mentioned below) of the backrest module 20 is connected to the base plate 10, thereby fixing the backrest module 20. Generally, the base plate 10 may be provided with mounting structures for mounting the backrest modules 20. For example, the base plate 10 may be provided with mounting structures allowing detachable connection, such as bolt connection, threaded connection or pin connection, such as mounting holes, threaded holes, mounting slots, pin holes, threaded posts, mounting posts and pins, to facilitate detachable mounting of the multiple backrest modules 20 on the base plate 10.

At least a portion of the base plate 10 is elastic; that is to say, all of the base plate 10 may be elastic, or only a partial region thereof may be elastic. It should be explained that the statement that "the base plate 10 is elastic" in the present application means that the base plate 10 can experience elastic deformation, i.e. the base plate 10 can experience deformation when an action force of a given size is applied to the base plate 10, and the base plate 10 can recover from the deformation when the applied action force of the given size is removed.

In some embodiments of the present application, for example in embodiments in which a partial region of the base plate 10 is elastic, the base plate 10 has at least one elastic region 101 and at least one rigid region 102. The elastic modulus of any elastic region 101 is smaller than the elastic modulus of any rigid region 102. Thus, when the elastic region 101 and/or the rigid region 102 is subjected to an action force, the elastic region 101 of the base plate will deform.

For example, referring to Fig. 2, Fig. 2 shows a schematic drawing of the base plate 10 in embodiments of the present application. When an action force F1 and an action force F2 are applied to the elastic region 101 in a middle part of the base plate 10, the elastic region 101 in the middle part of the base plate 10 will experience depression deformation. When an action force F3 and an action force F4, with at least partial components directed toward each other, are applied to the rigid regions 102 at two sides of the base plate 10, the two sides of the base plate 10 will experience compression under force, so the elastic regions 101 in the middle part of the base plate 10 will likewise experience depression deformation as a result.

It should be explained that in the description below, the center axis of the base plate 10 is any straight line through the geometric center of the base plate 10. Generally, the center axis of the base plate 10 is a straight line corresponding to the position of the user's spine when sitting; this makes it easier to make the shape of the base plate 10 correspond to the user's back, so that the seat backrest provides the user with complete back support.

In some embodiments of the present application, the base plate 10 has a first elastic region 1011 and a second elastic region 1012. The first elastic region 1011 and the second elastic region 1012 are respectively located at two sides of the center axis of the base plate 10.

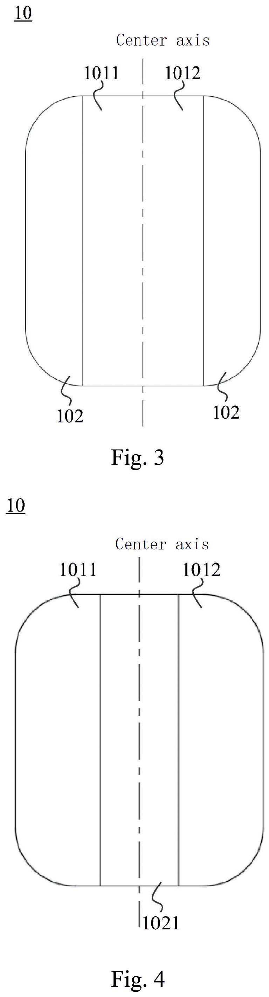

For example, referring to Fig. 3, Fig. 3 shows another schematic drawing of the base plate 10 in embodiments of the present application. The first elastic region 1011 and the second elastic region 1012 are in a middle part of the base plate 10, and the rigid regions 102 are at two sides of the base plate 10. When an action force is applied to the first elastic region 1011 and/or the second elastic region 1012, the middle part of the base plate 10 will experience depression deformation. Alternatively, when a compressive force is applied to the two sides of the base plate 10, it will likewise cause the middle part of the base plate 10 to experience depression deformation.

In some embodiments of the present application, the base plate 10 has a first rigid region 1021, a first elastic region 1011 and a second elastic region 1012. The first elastic region 1011 and the second elastic region 1012 are respectively located at two sides of the center axis of the base plate 10, and the first rigid region 1021 is arranged along the center axis of the base plate 10.

For example, referring to Fig. 4, Fig. 4 shows another schematic drawing of the base plate 10 in embodiments of the present application. The first elastic region 1011 and the second elastic region 1012 are located at two sides of the base plate 10, and the first rigid region 1021 is located in a middle part of the base plate 10. When an action force is applied to the first rigid region 1021, it will cause the middle part of the base plate 10 to experience depression.

In some embodiments of the present application, the base plate 10 has a second rigid region 1022, a first elastic region 1011 and a second elastic region 1012. The first elastic region 1011 and the second elastic region 1012 are respectively located at two sides of the center axis of the base plate 10. The second rigid region 1022 is arranged along an edge of the base plate 10.

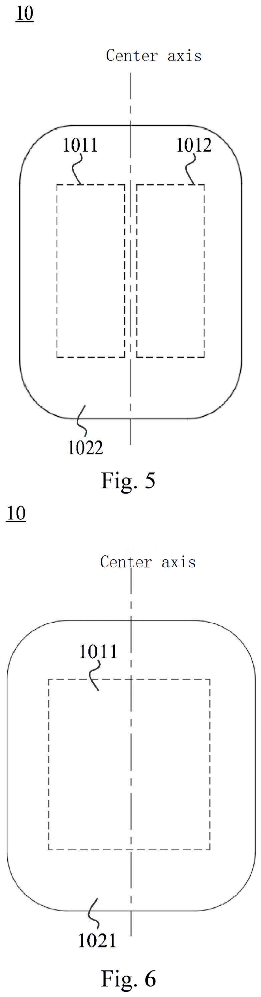

For example, referring to Fig. 5, Fig. 5 shows another schematic drawing of the base plate 10 in embodiments of the present application. The first elastic region 1011 and the second elastic region 1012 are in a middle part of the base plate 10, and the second rigid region 1022 is arranged in a ring shape along the edge of the base plate 10. When an action force is applied to the first elastic region 1011 and/or the second elastic region 1012, the middle part of the base plate 10 will experience depression deformation. Alternatively, when a compressive force is applied to the second rigid region 1022 at the edge at two sides of the base plate 10, it will likewise cause the middle part of the base plate 10 to experience depression deformation.

In some embodiments of the present application, the base plate 10 has a first rigid region 1021 and a first elastic region 1011. The first rigid region 1021 is arranged along an edge of the base plate 10, and the first rigid region 1021 surrounds the first elastic region 1011.

For example, referring to Fig. 6, Fig. 6 shows another schematic drawing of the base plate 10 in embodiments of the present application. The first elastic region 1011 is in a middle part of the base plate 10, the second rigid region 1022 is arranged in a ring shape along the edge of the base plate 10, and the first rigid region 1021 at the edge of the base plate 10 surrounds the first elastic region 1011 at the center of the base plate 10. When an action force is applied to the first elastic region 1011, the middle part of the base plate 10 will experience depression deformation. Alternatively, when a compressive force is applied to the first rigid region 1021 at the edge at two sides of the base plate 10, it will likewise cause the middle part of the base plate 10 to experience depression deformation.

In some embodiments of the present application, the base plate 10 has a first rigid region 1021 and multiple first elastic regions 1011. The first rigid region 1021 is arranged along an edge of the base plate 10, and the multiple first elastic regions 1011 are located in a ring enclosed by the first rigid region 1021.

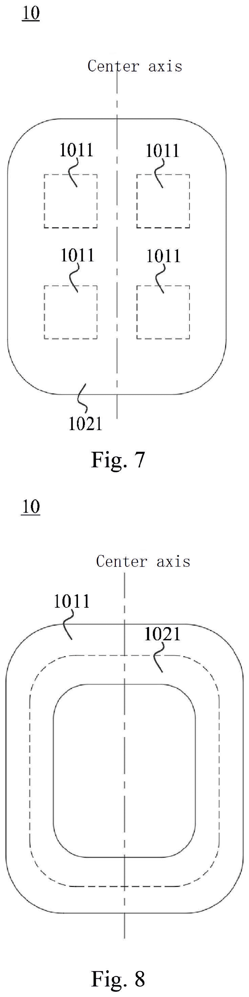

For example, referring to Fig. 7, Fig. 7 shows another schematic drawing of the base plate 10 in embodiments of the present application. The multiple first elastic regions 1011 are arranged in an array in a middle part of the base plate 10, and the first rigid region 1021 is arranged in a ring shape along the edge of the base plate 10. When an action force is applied to any of the first elastic regions 1011, the middle part of the base plate 10 will experience depression deformation. Alternatively, when a compressive force is applied to the first rigid region 1021 at the edge at two sides of the base plate 10, it will likewise cause the middle part of the base plate 10 to experience depression deformation.

In some embodiments of the present application, the base plate 10 has a first rigid region 1021 and a first elastic region 1011. The first elastic region 1011 is arranged along an edge region of the base plate 10, and the first rigid region 1021 is arranged in a ring shape along an inner periphery of the first elastic region 1011.

For example, referring to Fig. 8, Fig. 8 shows another schematic drawing of the base plate 10 in embodiments of the present application. The first elastic region 1011 is arranged in a ring shape along an edge of the base plate 10, the first rigid region 1021 is arranged in a ring shape at the inner periphery of the first elastic region 1011, and a middle part of the base plate 10 is a hollow region. When an action force is applied to the first rigid region 1021, the first rigid region 1021 forming an inner ring will be depressed downward.

In some embodiments of the present application, the base plate 10 has a first rigid region 1021, a first elastic region 1011 and a second elastic region 1012. The first elastic region 1011 is arranged along an edge region of the base plate 10, the first rigid region 1021 is arranged in a ring shape along an inner periphery of the first elastic region 1011, and the first rigid region 1021 surrounds the second elastic region 1012.

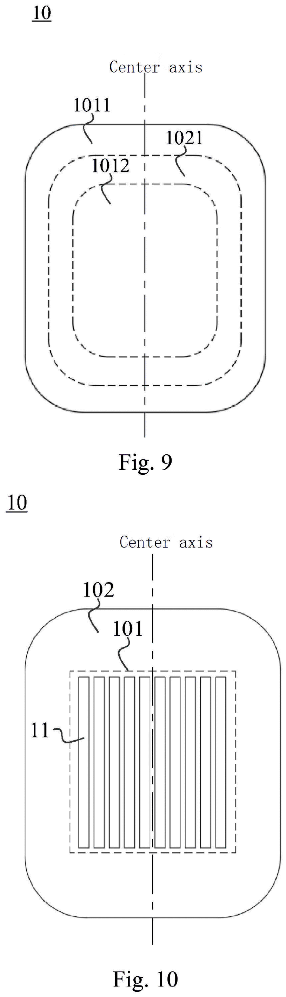

For example, referring to Fig. 9, Fig. 9 shows another schematic drawing of the base plate 10 in embodiments of the present application. The first elastic region 1011 is arranged in a ring shape along an edge of the base plate 10, the first rigid region 1021 is arranged in a ring shape at an inner periphery of the first elastic region 1011, and the second elastic region 1012 is in a middle part of the base plate 10. When an action force is applied to the first rigid region 1021 or the second elastic region 1012, the middle part of the base plate 10 can be depressed downward.

It should be noted that the schematic layouts of the elastic region 101 and the rigid region 102 of the base plate 10 described above merely serve as exemplary embodiments of the present application, and those skilled in the art could make equivalent modified designs under the guidance of the present application. For example, the elastic regions 101 shown in Figs. 2 - 9 are approximately rectangular in shape; in some possible embodiments, the shape of the elastic region 101 could also be a circle, a triangle, a regular pentagon, or another shape.

As an exemplary embodiment of one type of elastic region 101, referring to Fig. 10, Fig. 10 shows another schematic drawing of the base plate 10 in embodiments of the present application, wherein the elastic region 101 of the base plate 10 is provided with multiple first through-slots 11 penetrating the base plate 10. The first through-slots 11 provided in the base plate 10 make this region more easily deformable when subjected to an action force of the same size. When an action force is applied to the elastic region 101, a middle part of the base plate 10 will experience depression deformation. Alternatively, when a compressive force is applied to the two sides of the base plate 10, it will likewise cause the middle part of the base plate 10 to experience depression deformation.

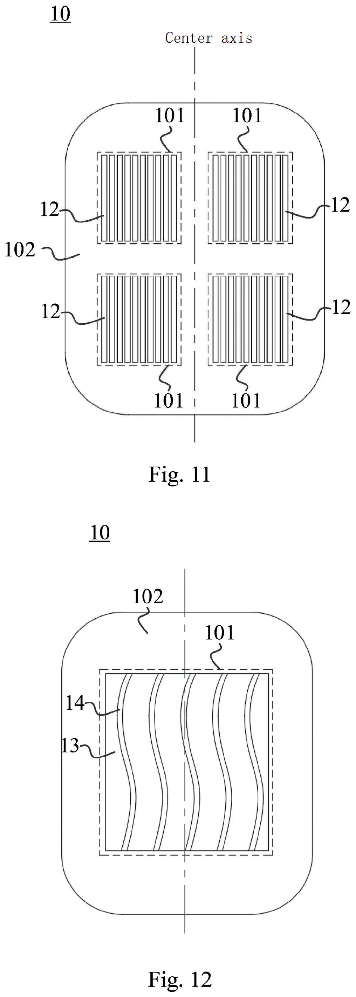

As an exemplary embodiment of another type of elastic region 101, referring to Fig. 11, Fig. 11 shows another schematic drawing of the base plate 10 in embodiments of the present application, wherein the elastic region 101 of the base plate 10 is provided with multiple first grooves 12. The first grooves 12 provided on the base plate 10 make this region more easily deformable when subjected to an action force of the same size. When an action force is applied to the elastic region 101, a middle part of the base plate 10 will experience depression deformation. Alternatively, when a compressive force is applied to the two sides of the base plate 10, it will likewise cause the middle part of the base plate 10 to experience depression deformation.

As an exemplary embodiment of another type of elastic region 101, referring to Fig. 12, Fig. 12 shows another schematic drawing of the base plate 10 in embodiments of the present application, wherein the elastic region 101 of the base plate 10 is provided with a second through-slot 13 corresponding in size to the elastic region 101, and multiple elastic members 14 are installed in the second through-slot 13. The elastic members 14 may be but are not limited to structural members capable of experiencing elastic deformation, such as coil springs, linear springs or rubber members. The multiple elastic members 14 can make this region more easily deformable when subjected to an action force of the same size. When an action force is applied to the elastic region 101, a middle part of the base plate 10 will experience depression deformation. Alternatively, when a compressive force is applied to the two sides of the base plate 10, it will likewise cause the middle part of the base plate 10 to experience depression deformation.

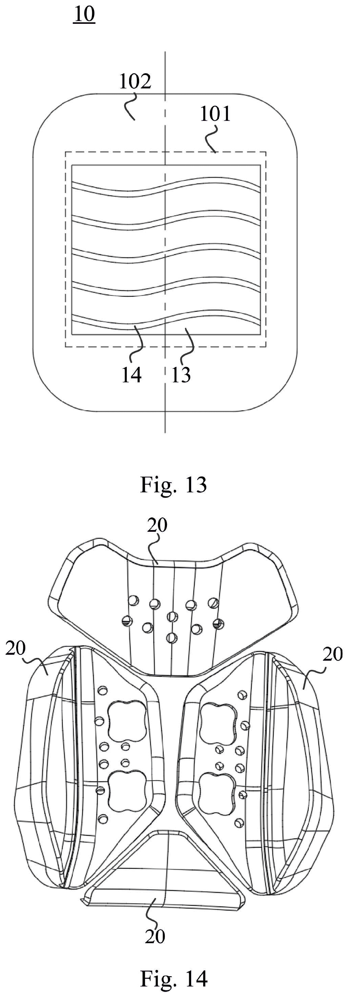

It should be noted that the embodiments of the elastic region 101 of the base plate 10 described above merely serve as exemplary embodiments of the present application, and those skilled in the art could make equivalent modified designs under the guidance of the present application. For example, the first through-slots 11, the first grooves 12 and the elastic members 14 of the elastic regions 101 shown in Figs. 10 - 12 extend in a direction parallel to the center axis of the base plate 10, but are not limited to this. For example, in some possible embodiments, referring to Fig. 13, Fig. 13 shows another schematic drawing of the base plate 10 in embodiments of the present application, and the elastic members 14 could also extend in a direction perpendicular to the center axis of the base plate 10.

Continuing to refer to Figs. 1 and 14, Fig. 14 shows a schematic layout drawing of the multiple backrest modules 20 in embodiments of the present application. The multiple backrest modules 20 are mounted on the base plate 10, and the multiple backrest modules 20 are combined to form seat backrest support, to facilitate the provision of backrest support for at least a partial region of the user's back (e.g. a left region of the small of the back, a right region of the small of the back, a cervical vertebrae region, a lumbar vertebrae region, a shoulder blade region, a rib region, a sacrococcygeal region, a thoracodorsal region, etc.) via the multiple backrest modules 20.

Generally, each backrest module 20 may be provided with a mounting structure. For example, the backrest module 20 may be provided with a mounting structure allowing detachable connection, such as bolt connection, threaded connection or pin connection, such as a mounting hole, threaded hole, mounting slot, pin hole, threaded post, mounting post or pin, to facilitate detachable mounting of the multiple backrest modules 20 on the base plate 10.

It will be understood that in some possible embodiments, the multiple backrest modules 20 could also be non-detachably fixed to the base plate 10. For example, a connection structure (e.g. a connecting post) of the backrest module 20 could be welded to a rigid region of the base plate 10.

In some embodiments of the present application, each backrest module 20 may comprise a backrest support plate 210.

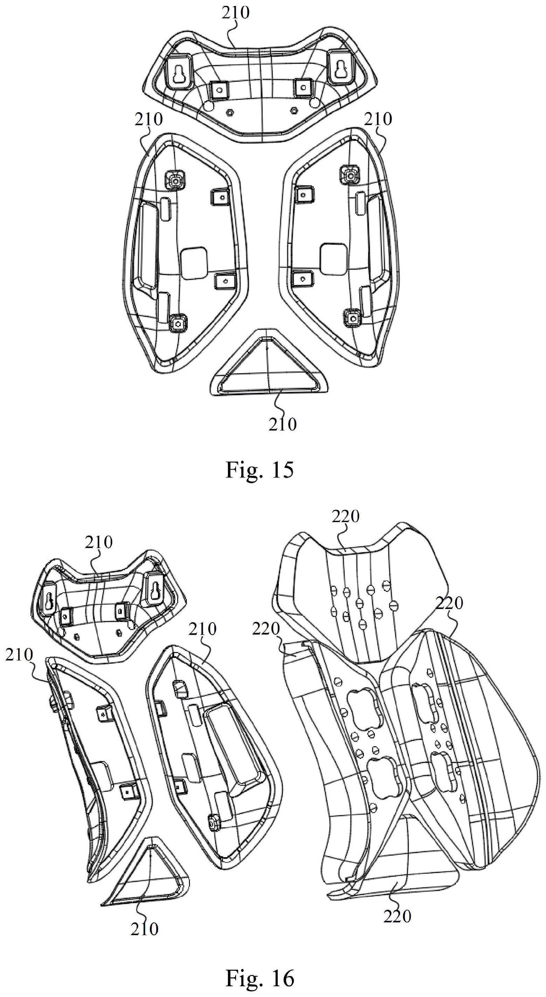

For example, referring to Fig. 15, Fig. 15 shows a structural schematic drawing of backrest modules 20 in embodiments of the present application, wherein backrest modules 20 at a left side, a right side, an upper side and a lower side all comprise backrest support plates 210. The backrest support plates 210 may be mounted on the base plate 10 via detachable connection structures, such that the multiple backrest support plates 210 form seat backrest support.

In some embodiments of the present application, each backrest module 20 comprises a backrest support plate 210 and a backrest foam body 220, the backrest foam body 220 being mounted on a side of the backrest support plate 210 that faces away from the base plate 10.

For example, referring to Fig. 16, Fig. 16 shows another structural schematic drawing of backrest modules 20 in embodiments of the present application, wherein each backrest module 20 comprises a backrest support plate 210 and a backrest foam body 220, the backrest foam body 220 being mounted on the backrest support plate 210. The backrest foam body 220 can provide elastic support for the user, thereby offering the user a good ride experience. The backrest support plate 210 may be provided with a mounting structure allowing detachable connection, such as bolt connection, threaded connection or pin connection, such as a mounting hole, threaded hole, mounting slot, pin hole, threaded post, mounting post or pin, to facilitate mounting of the backrest module 20 on the base plate 10.

In some embodiments of the present application, each backrest module 20 comprises a backrest support plate 210. At least two backrest support plates 210 are configured to have the same backrest foam body 220 mounted thereon.

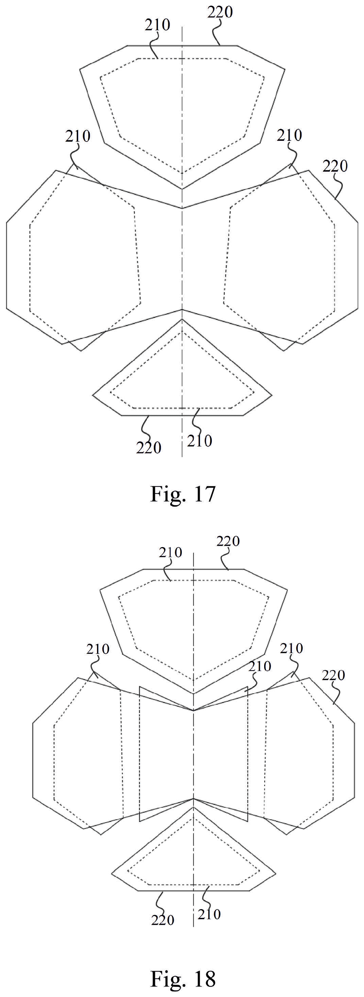

For example, referring to Fig. 17, Fig. 17 shows another structural schematic drawing of backrest modules 20 in embodiments of the present application, wherein the same backrest foam body 220 is mounted on two backrest support plates 210 at the left side and right side, so that the backrest foam body 220 becomes the main flexible object supporting the back of the human body.

As another example, referring to Fig. 18, Fig. 18 shows another structural schematic drawing of backrest modules 20 in embodiments of the present application, wherein the same backrest foam body 220 is mounted on three backrest support plates 210 at the left side and right side and in a central region, so that the backrest foam body 220 becomes the main flexible object supporting the back of the human body.

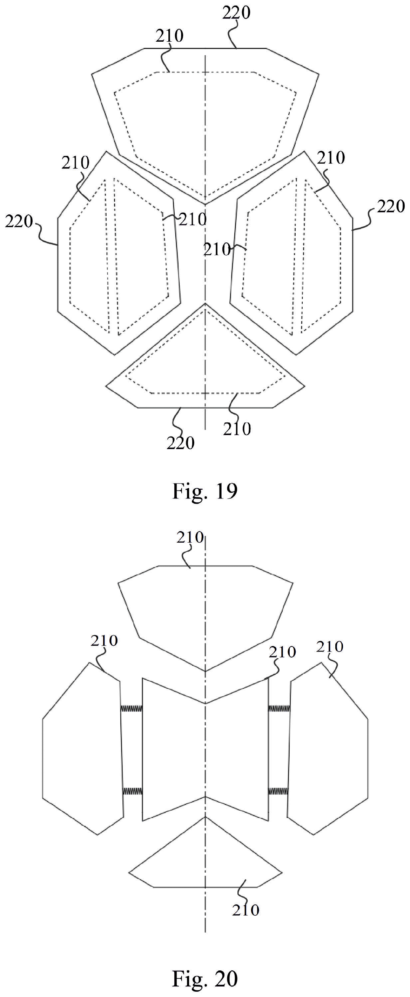

As another example, referring to Fig. 19, Fig. 19 shows another structural schematic drawing of backrest modules 20 in embodiments of the present application. The same backrest foam body 220 is mounted on two backrest support plates 210 at the left side, and the same backrest foam body 220 is mounted on two backrest support plates 210 at the right side, so that the two backrest foam bodies 220 become the main flexible objects supporting regions at the left side and right side of the back of the human body.

As will be understood, the backrest foam body 220 in the embodiments above may solely be a hard foam plastic (such as polystyrene foam or epoxy resin foam), a soft foam plastic (such as polyurethane sponge or rubber foam) or a semi-hard foam plastic, or the backrest foam body 220 may be various types of foam and flexible material formed by a cover, so as to wrap the backrest foam body 220 in the cover.

In some embodiments of the present application, adjacent backrest support plates 210 may also be connected to each other by a movable connection member.

For example, referring to Fig. 20, Fig. 20 shows another structural schematic drawing of backrest modules 20 in embodiments of the present application. The backrest support plates 210 at the left and right sides may be connected by springs, so that the backrest support plates 210 at the left and right sides generate interactive force during attitude adjustment, and an attitude adjustment process characterized by linked motion is formed.

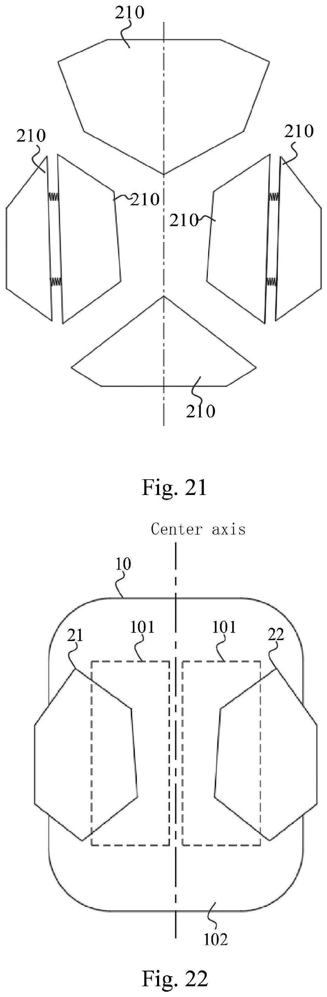

As another example, referring to Fig. 21, Fig. 21 shows another structural schematic drawing of backrest modules 20 in embodiments of the present application. The two backrest support plates 210 at the left side may be connected by springs, and the two backrest support plates 210 at the right side may be connected by springs, so that the two backrest support plates 210 at the left and right sides generate interactive force during attitude adjustment, and an attitude adjustment process characterized by linked motion is formed.

It should be explained that the above are merely exemplary embodiments of the backrest modules 20, and those skilled in the art could make equivalent modified designs under the guidance of the present application. For example, it is also possible for multiple backrest foam bodies to be mounted on each backrest support plate 210. However, it should be emphasized that in the present application, regardless of whether one or more backrest foam body 220 is mounted on each backrest support plate 210, or the same backrest foam body 220 is mounted on multiple backrest support plates 210, or multiple backrest foam bodies 220 are mounted on the base plate directly, the configuration should be considered to be within the scope of the "multiple backrest modules" of the present application.

In some embodiments of the present application, the multiple backrest modules 20 comprise a first side wing support module 21 and a second side wing support module 22. The first side wing support module 21 and the second side wing support module 22 are respectively mounted at two sides of the center axis of the base plate 10.

For example, referring to Fig. 22, Fig. 22 shows a schematic drawing of multiple backrest modules 20 mounted on the base plate 10 in embodiments of the present application, wherein the first side wing support module 21 and the second side wing support module 22 are respectively located at the left and right sides of the center axis of the base plate 10. The first side wing support module 21 can provide support for at least a left side of the small of the user's back, and the second side wing support module 22 can provide support for at least a right side of the small of the user's back, thereby ensuring reliable support for the user's back.

In some embodiments of the present application, the multiple backrest modules 20 comprise a first side wing support module 21, a second side wing support module 22 and a first end support module 23. The first side wing support module 21 and the second side wing support module 22 are respectively mounted at two sides of the center axis of the base plate 10, and the first end support module 23 is mounted at a first end of the base plate 10 in the direction of the center axis.

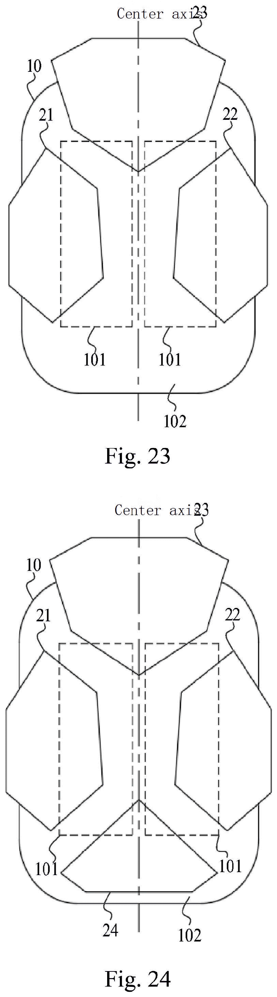

For example, referring to Fig. 23, Fig. 23 shows another schematic drawing of multiple backrest modules mounted on the base plate 10 in embodiments of the present application, wherein the first side wing support module 21 and the second side wing support module 22 are respectively located at the left and right sides of the center axis of the base plate 10, and the first end support module 23 is located at an upper end of the base plate 10. The first side wing support module 21 can provide support for at least a left side of the small of the user's back, the second side wing support module 22 can provide support for at least a right side of the small of the user's back, and the first end support module 23 can provide support for a shoulder-and-neck region of the user's back, thereby offering the user a better passenger experience.

In some embodiments of the present application, the multiple backrest modules 20 comprise a first side wing support module 21, a second side wing support module 22, a first end support module 23 and a second end support module 24. The first side wing support module 21 and the second side wing support module 22 are respectively mounted at two sides of the center axis of the base plate 10, the first end support module 23 is mounted at the first end of the base plate 10 in the direction of the center axis, and the second end support module 24 is mounted at a second end of the base plate 10 in the direction of the center axis.

For example, referring to Fig. 24, Fig. 24 shows another schematic drawing of multiple backrest modules mounted on the base plate 10 in embodiments of the present application, wherein the first side wing support module 21 and the second side wing support module 22 are respectively located at the left and right sides of the center axis of the base plate 10, the first end support module 23 is located at an upper end of the base plate 10, and the first end support module 23 is located at a lower end of the base plate 10. The first side wing support module 21 can provide support for at least a left side of the small of the user's back, the second side wing support module 22 can provide support for at least a right side of the small of the user's back, the first end support module 23 can provide support for a shoulder-and-neck region of the user's back, and the second end support module 24 can provide support for the tailbone of the user's back, thereby offering the user a better passenger experience.

In some embodiments of the present application, the multiple backrest modules 20 comprise multiple first side wing secondary support modules 211 and multiple second side wing secondary support modules 221, the multiple first side wing secondary support modules 211 and the multiple second side wing secondary support modules 221 being respectively mounted at two sides of the center axis of the base plate 10.

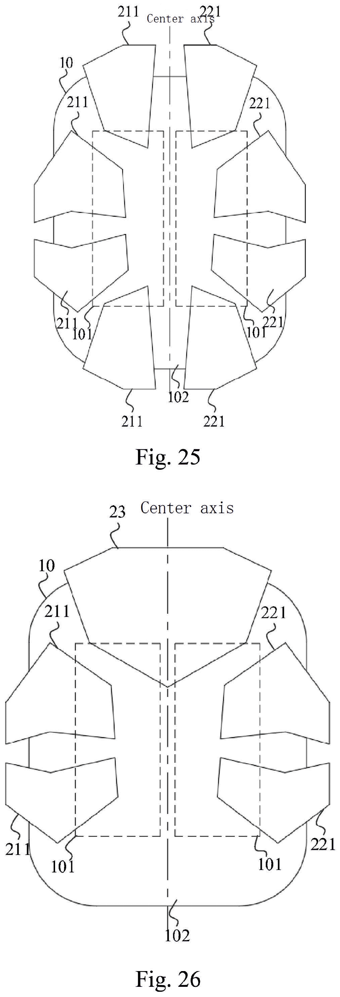

For example, referring to Fig. 25, Fig. 25 shows another schematic drawing of multiple backrest modules mounted on the base plate 10 in embodiments of the present application, wherein the multiple first side wing secondary support modules 211 are located at the left side of the base plate 10, and the multiple second side wing secondary support modules 221 are located at the right side of the base plate 10. The multiple second side wing secondary support modules 221 can provide support for at least a left side of the user's back, and the multiple first side wing secondary support modules 211 can provide support for at least a right side of the user's back.

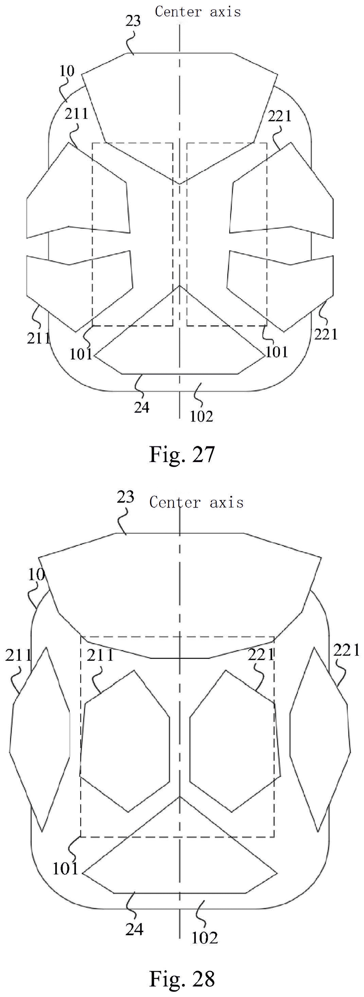

Those skilled in the art will understand that the layouts of the multiple backrest modules 20 on the base plate 10 described above are not limited to Figs. 22 - 25. For example, referring to Fig. 26, Fig. 26 shows another schematic drawing of multiple backrest modules mounted on the base plate 10 in embodiments of the present application. In an embodiment in which the multiple backrest modules 20 comprise the multiple first side wing secondary support modules 211 and the multiple second side wing secondary support modules 221, the multiple backrest modules 20 may further comprise the first end support module 23, the first end support module 23 being mounted at the first end of the base plate 10 in the direction of the center axis. As another example, referring to Fig. 27, Fig. 27 shows another schematic drawing of multiple backrest modules mounted on the base plate 10 in embodiments of the present application. In an embodiment in which the multiple backrest modules 20 comprise the multiple first side wing secondary support modules 211 and the multiple second side wing secondary support modules 221, the multiple backrest modules 20 may further comprise the second end support module 24, the second end support module 24 being mounted at the second end of the base plate 10 in the direction of the center axis. As another example, referring to Fig. 28, Fig. 28 shows another schematic drawing of multiple backrest modules mounted on the base plate 10 in embodiments of the present application. In an embodiment in which the multiple backrest modules 20 comprise the multiple first side wing secondary support modules 211 and the multiple second side wing secondary support modules 221, the multiple first side wing secondary support modules 211 may be arranged in a direction perpendicular to the center axis, and the multiple second side wing secondary support modules 221 may be arranged in a direction perpendicular to the center axis.

In embodiments of the present application, since at least a portion of the base plate 10 is elastic, the base plate 10 can experience elastic deformation, such that at least one backrest module 20 adjusts its attitude as the base plate 10 deforms.

For example, in Fig. 22, suppose that the first side wing support module 21 and the second side wing support module 22 are partially connected to the elastic region 101. When the elastic region 101 in the middle part of the base plate 10 experiences depression deformation in a direction away from the multiple backrest modules 20, a portion of the first side wing support module 21 close to the center of the base plate 10 moves downward with the depression deformation, while a portion of the first side wing support module 21 that is remote from the center of the base plate 10 tilts upward. By the same principle, a portion of the second side wing support module 22 close to the center of the base plate 10 moves downward with the depression deformation, while a portion of the second side wing support module 22 that is remote from the center of the base plate 10 tilts upward. At this time, the first side wing support module 21 and the second side wing support module 22 have both adjusted their attitude, thereby offering the user a ride experience in which the user is enveloped by the backrest.

As another example, in Fig. 23, suppose that the first side wing support module 21 and the second side wing support module 22 are partially connected to the elastic region 101, and the first end support module 23 is partially connected to the elastic region 101. When the elastic region 101 in the middle part of the base plate 10 experiences depression deformation in a direction away from the multiple backrest modules 20, portions of the first side wing support module 21 and the second side wing support module 22 close to the center of the base plate 10 move downward with the depression deformation, while portions remote from the center of the base plate 10 tilt upward. At the same time, a portion of the first end support module 23 close to the center of the base plate 10 moves downward with the depression deformation, while a portion of the first end support module 23 that is remote from the center of the base plate 10 tilts upward. At this time, the first side wing support module 21, the second side wing support module 22 and a third side wing support module have all adjusted their attitude, offering the user a ride experience in which the user is enveloped.

As can be seen, in embodiments of the present application, since at least a portion of the base plate 10 is elastic, at least one backrest module 20 can adjust its attitude as the base plate 10 deforms. Firstly, the elasticity of the base plate 10 allows the seat backrest to better fit the curves of the back of the human body, thereby improving the user experience. Secondly, if the motor vehicle is involved in an accident, the elasticity of the base plate 10 enables more deformation to occur, thereby providing effective cushioning for the driver or passenger, so as to realize motor vehicle collision protection. Thirdly, to design an automotive seat with novel appearance and functionality, it is only necessary to change the shape and layout design of the multiple backrest modules 20; this helps to increase the speed of development and iteration of automotive seats, so as to meet the current demand for fast replacement of motor vehicle generations. Fourthly, if a user wishes to configure the seat or perform seat maintenance according to personal preference, all that need be done is to replace the multiple backrest modules 20 with others of a different shape and/or layout; this not only reduces the cost and difficulty of maintenance, but also enables personalized configuration of the seat backrest according to different user demands.

In some embodiments of the present application, at least a partial region of the base plate 10 can be depressed in a direction away from the multiple backrest modules 20, with at least one backrest module 20 adjusting its attitude as the base plate 10 is depressed.

For example, in Fig. 22, suppose that the first side wing support module 21 and the second side wing support module 22 are partially connected to the elastic region 101 at the center of the base plate 10. When the elastic region 101 at the center of the base plate 10 is depressed in a direction away from the multiple backrest modules 20, portions of the first side wing support module 21 and the second side wing support module 22 close to the center of the base plate 10 move downward with the depression deformation, while portions remote from the center of the base plate 10 tilt upward.

As another example, in Fig. 23, suppose that the first end support module 23 is partially connected to the elastic region 101 at the center of the base plate 10. When the elastic region 101 at the center of the base plate 10 is depressed in a direction away from the multiple backrest modules 20, a portion of the first end support module 23 close to the center of the base plate 10 moves downward with the depression deformation, while a portion remote from the center of the base plate 10 tilts upward.

As another example, referring to Fig. 24, suppose that the second end support module 24 is partially connected to the elastic region 101 at the center of the base plate 10. When the elastic region 101 at the center of the base plate 10 is depressed in a direction away from the multiple backrest modules 20, a portion of the second end support module 24 close to the center of the base plate 10 moves downward with the depression deformation, while a portion remote from the center of the base plate 10 tilts upward.

As another example, referring to Fig. 25, suppose that each first side wing secondary support module 211 is partially connected to the elastic region 101 at the center of the base plate 10, and each second side wing secondary support module 221 is partially connected to the elastic region 101 at the center of the base plate 10. When the elastic region 101 at the center of the base plate 10 is depressed in a direction away from the multiple backrest modules 20, portions of the first side wing secondary support module 211 and the second side wing secondary support module 221 and the second end support module 24 close to the center of the base plate 10 move downward with the depression deformation, while portions remote from the center of the base plate 10 tilt upward.

In some embodiments of the present application, when at least a partial region of the base plate 10 experiences depression deformation, at least one backrest module 20 is deflected toward a depressed region of the base plate 10.

For example, in Fig. 22, suppose that the first side wing support module 21 and the second side wing support module 22 are partially connected to the elastic region 101 at the center of the base plate 10, and the first side wing support module 21 and the second side wing support module 22 are partially connected to the rigid region 102 at the center of the base plate 10. When the elastic region 101 at the center of the base plate 10 is depressed in a direction away from the multiple backrest modules 20, portions of the first side wing support module 21 and the second side wing support module 22 close to the center of the base plate 10 move downward with the depression deformation, while portions remote from the center of the base plate 10 tilt upward. Overall, the first side wing support module 21 and the second side wing support module 22 are deflected toward a depressed region of the base plate 10, in order to offer the user a ride experience in which the user is enveloped.

As another example, in Fig. 23, suppose that the first end support module 23 is partially connected to the elastic region 101 at the center of the base plate 10, and the first end support module 23 is partially connected to the rigid region 102 at the center of the base plate 10. When the elastic region 101 at the center of the base plate 10 is depressed in a direction away from the multiple backrest modules 20, a portion of the first end support module 23 close to the center of the base plate 10 moves downward with the depression deformation, while a portion remote from the center of the base plate 10 tilts upward. Overall, the first end support module 23 is also deflected toward a depressed region of the base plate 10.

As another example, in Fig. 24, suppose that the second end support module 24 is partially connected to the elastic region 101 at the center of the base plate 10, and the second end support module 24 is partially connected to the rigid region 102 at the center of the base plate 10. When the elastic region 101 at the center of the base plate 10 is depressed in a direction away from the multiple backrest modules 20, a portion of the second end support module 24 close to the center of the base plate 10 moves downward with the depression deformation, while a portion remote from the center of the base plate 10 tilts upward. Overall, the second end support module 24 is also deflected toward a depressed region of the base plate 10.

As another example, in Fig. 25, suppose that the first side wing secondary support modules 211 and the second side wing secondary support modules 221 are partially connected to the elastic region 101 at the center of the base plate 10, and the first side wing secondary support modules 211 and the second side wing secondary support modules 221 are partially connected to the rigid region 102 at the center of the base plate 10. When the elastic region 101 at the center of the base plate 10 is depressed in a direction away from the multiple backrest modules 20, portions of the first side wing secondary support modules 211 and the second side wing secondary support modules 221 close to the center of the base plate 10 move downward with the depression deformation, while portions remote from the center of the base plate 10 tilt upward. Overall, the first side wing secondary support modules 211 and the second side wing secondary support modules 221 are deflected toward a depressed region of the base plate 10.

In some embodiments of the present application, at least a partial region of the base plate 10 located close to the center axis can be depressed in a direction away from the multiple backrest modules 20.

For example, in Fig. 3, the first elastic region 1011 and the second elastic region 1012 are in a middle part of the base plate 10, and the rigid regions 102 are at two sides of the base plate 10. When an action force is applied to the first elastic region 1011 and/or the second elastic region 1012, the middle part of the base plate 10 experiences depression deformation. Alternatively, when a compressive force is applied to the two sides of the base plate 10, it will likewise cause the middle part of the base plate 10 to experience depression deformation.

As another example, in Fig. 4, the first elastic region 1011 and the second elastic region 1012 are located at two sides of the base plate 10, and the first rigid region 1021 is located in a middle part of the base plate 10. When an action force is applied to the first rigid region 1021, it will cause the middle part of the base plate 10 to experience depression.

As another example, in Fig. 5, the first elastic region 1011 and the second elastic region 1012 are in a middle part of the base plate 10, and the second rigid region 1022 is arranged in a ring shape along an edge of the base plate 10. When an action force is applied to the first elastic region 1011 and/or the second elastic region 1012, the middle part of the base plate 10 experiences depression deformation. Alternatively, when a compressive force is applied to the second rigid region 1022 at the edge at two sides of the base plate 10, it will likewise cause the middle part of the base plate 10 to experience depression deformation.

As another example, in Fig. 6, the first elastic region 1011 is in a middle part of the base plate 10, and the second rigid region 1022 is arranged in a ring shape along an edge of the base plate 10. When an action force is applied to the first elastic region 1011, the middle part of the base plate 10 experiences depression deformation. Alternatively, when a compressive force is applied to the first rigid region 1021 at the edge at two sides of the base plate 10, it will likewise cause the middle part of the base plate 10 to experience depression deformation.

As another example, in Fig. 7, the multiple first elastic regions 1011 are arranged in an array in a middle part of the base plate 10, and the first rigid region 1021 is arranged in a ring shape along an edge of the base plate 10. When an action force is applied to any of the first elastic regions 1011, the middle part of the base plate 10 experiences depression deformation. Alternatively, when a compressive force is applied to the first rigid region 1021 at the edge at two sides of the base plate 10, it will likewise cause the middle part of the base plate 10 to experience depression deformation.

As another example, in Fig. 8, the first elastic region 1011 is arranged in a ring shape along an edge of the base plate 10, the first rigid region 1021 is arranged in a ring shape at an inner periphery of the first elastic region 1011, and a middle part of the base plate 10 is a hollow region. When an action force is applied to the first rigid region 1021, the first rigid region 1021 forming an inner ring will be depressed downward.

As another example, in Fig. 9, the first elastic region 1011 is arranged in a ring shape along an edge of the base plate 10, the first rigid region 1021 is arranged in a ring shape at an inner periphery of the first elastic region 1011, and the second elastic region 1012 is in a middle part of the base plate 10. When an action force is applied to the first rigid region 1021 or the second elastic region 1012, the middle part of the base plate 10 can be depressed downward.

It should be pointed that the depression deformation of the base plate 10 may occur under an action force applied to the base plate 10 by one or more backrest modules 20, or may be caused by an action force applied to the base plate 10 by another object; the present application imposes no specific restrictions.

In some embodiments of the present application, at least one backrest module 20 has at least one first connecting part 201 and at least one second connecting part 202.

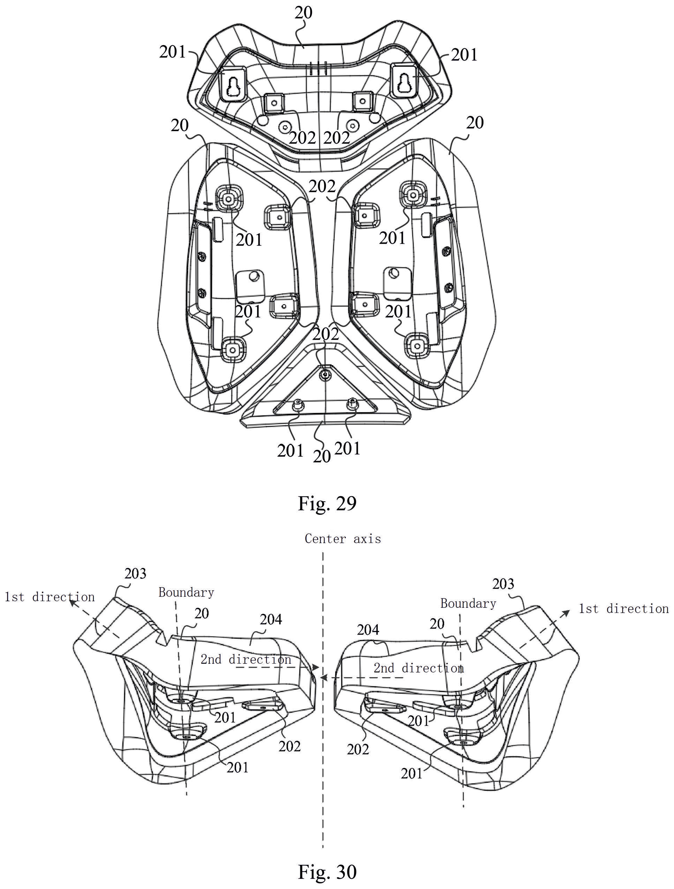

For example, referring to Fig. 29, Fig. 29 shows a schematic drawing of a side of the multiple backrest modules 20 facing the base plate 10 in embodiments of the present application, wherein the backrest modules 20 at the left and right sides each have two first connecting parts 201 and two second connecting parts 202, the backrest module 20 at the top respectively has two first connecting parts 201 and two second connecting parts 202, and the backrest module 20 at the bottom has two first connecting parts 201 and one second connecting part 202; the various backrest modules 20 can be fixed by means of these connecting parts.

It should be explained that, in a backrest module 20 having the first connecting part 201 and the second connecting part 202, at least one first connecting part 201 of the backrest module 20 is connected to a first object, and at least one second connecting part 202 is connected to a second object. At least one of the first object and the second object is the elastic region 101 or the rigid region 102 of the base plate 10. That is to say, the first object may be the elastic region 101 of the base plate 10, and the second object may be the elastic region 101 of the base plate 10. Alternatively, the first object may be the elastic region 101 of the base plate 10, and the second object may be the rigid region 102 of the base plate 10. Alternatively, the first object may be the rigid region 102 of the base plate 10, and the second object may be the rigid region 102 of the base plate 10. Alternatively, the first object may be the elastic region 101 of the base plate 10, and the second object may be a structural member other than the base plate 10 (e.g. a backrest frame 30 mentioned below). Alternatively, the first object may be the rigid region 102 of the base plate 10, and the second object may be a structural member other than the base plate 10 (e.g. the backrest frame 30 mentioned below).

In some embodiments of the present application, the first connecting part 201 of at least one backrest module 20 is rotatably connected to the first object, and the second connecting part 202 is elastically connected to the second object.

It should be explained that, since the first connecting part 201 of the backrest module 20 is rotatably connected to the first object, when the base plate 10 is depressed (e.g. the center experiences depression deformation), the backrest module 20 can experience deflection movement through rotation of the first connecting part 201. Thus, the backrest module 20 can undergo attitude adjustment by deflection through a larger angle. This helps to achieve an enveloping ride experience for the user more effectively. Moreover, since the second connecting part 202 is elastically connected to the second object, firstly, the attitude of the backrest module 20 can be further adjusted through elastic deformation at the position of connection of the second connecting part 202, so as to adapt to the curves of the back of the human body, and this helps to further improve the user experience. Secondly, elastic deformation at the position of connection of the second connecting part 202 can combine with elastic deformation of the base plate 10, so if the motor vehicle is involved in a collision, multi-level cushioning can be achieved to further improve the motor vehicle collision protection effect.

In some embodiments of the present application, for example in an embodiment in which the first connecting part 201 of at least one backrest module 20 is rotatably connected to the first object, at least one backrest module 20 comprises a first support part 203 and a second support part 204. The first support part 203 extends in a first direction, and the second support part 204 extends in a second direction. The first direction is not parallel to the second direction, and the first connecting part 201 used for rotatable connection is located at a boundary between the first support part 203 and the second support part 204.

For example, referring to Fig. 30, Fig. 30 shows a schematic top view of backrest modules 20 in embodiments of the present application. The second support part 204 of the backrest module 20 at the left side extends in a second direction which is perpendicular to the center axis of the base plate 10, and the first support part 203 extends in a first direction which is away from the center axis of the base plate 10 and deflected by a certain angle. The second support part 204 of the backrest module 20 at the right side extends in a second direction which is perpendicular to the center axis of the base plate 10, and the first support part 203 extends in a first direction which is away from the center axis of the base plate 10 and deflected by a certain angle. Moreover, the first connecting parts 201, used for rotatable connection, of the backrest module 20 at the left side and the backrest module 20 at the right side are located at the boundary between the first support part 203 and the second support part 204. Thus, when the base plate 10 is depressed (e.g. the center experiences depression deformation), the backrest module 20 at the left side and the backrest module 20 at the right side can undergo attitude adjustment by deflection through a larger angle by means of the first connecting parts 201. This helps to achieve an enveloping ride experience for the user more effectively.

In some embodiments of the present application, for example in an embodiment in which the first connecting part 201, used for rotatable connection, of the backrest module 20 is located at the boundary between the first support part 203 and the second support part 204, the second connecting part 202 of at least one backrest module 20 may be located at a side of the second support part 204 that faces toward the base plate 10.

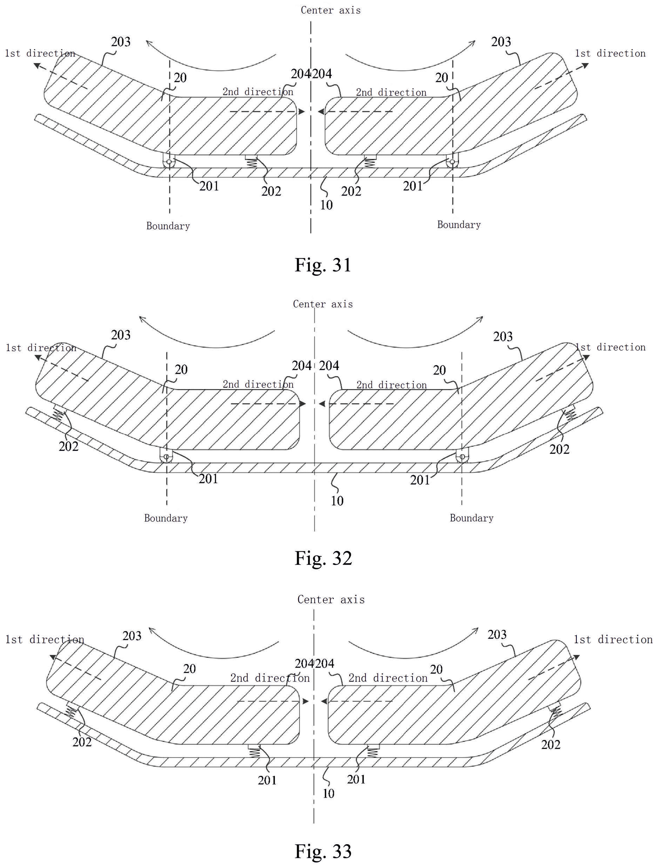

For example, referring to Fig. 31, Fig. 31 shows a sectional schematic drawing of the positions of connection of the backrest modules 20 to the base plate 10 in the present application. The second connecting part 202, used for elastic connection, of the backrest module 20 at the left side is arranged on the second support part 204 thereof close to the center axis of the base plate 10, and the second connecting part 202 used for elastic connection is located at a side of the second support part 204 that faces toward the base plate 10. The second connecting part 202, used for elastic connection, of the backrest module 20 at the right side is arranged on the second support part 204 thereof close to the center axis of the base plate 10, and the second connecting part 202 used for elastic connection is located at a side of the second support part 204 that faces toward the base plate 10. Thus, the backrest module 20 at the left side and the backrest module 20 at the right side each have at least one first connecting part 201 used for rotatable connection and at least one second connecting part 202 used for elastic connection. Compressive elastic deformation of a connecting spring of the second connecting part 202 can combine with elastic deformation of the base plate 10, so if the motor vehicle is involved in a collision, multi-level cushioning can be achieved to further improve the motor vehicle collision protection effect.

In some embodiments of the present application, for example in an embodiment in which the first connecting part 201, used for rotatable connection, of the backrest module 20 is located at the boundary between the first support part 203 and the second support part 204, the second connecting part 202 of at least one backrest module 20 is located at a side of the first support part 203 that faces toward the base plate 10.

For example, referring to Fig. 32, Fig. 32 shows another sectional schematic drawing of the positions of connection of the backrest modules 20 to the base plate 10 in the present application. The second connecting part 202, used for elastic connection, of the backrest module 20 at the left side is arranged on the first support part 203 thereof remote from the center axis of the base plate 10, and the second connecting part 202 used for elastic connection is located at a side of the first support part 203 that faces toward the base plate 10. The second connecting part 202, used for elastic connection, of the backrest module 20 at the right side is arranged on the first support part 203 thereof remote from the center axis of the base plate 10, and the second connecting part 202 used for elastic connection is located at a side of the first support part 203 that faces toward the base plate 10. Thus, the backrest module 20 at the left side and the backrest module 20 at the right side each have at least one first connecting part 201 used for rotatable connection and at least one second connecting part 202 used for elastic connection. Stretching elastic deformation of a connecting spring of the second connecting part 202 can combine with elastic deformation of the base plate 10, so if the motor vehicle is involved in a collision, multi-level cushioning can be achieved to further improve the motor vehicle collision protection effect.

In some embodiments of the present application, for example in an embodiment in which the first connecting part 201 of at least one backrest module 20 is rotatably connected to the first object and the second connecting part 202 is elastically connected to the second object, at least one first connecting part 201 of the backrest module 20 is located at a side of the second connecting part 202 that is remote from the center of the base plate 10, and the second connecting part 202 is connected to the second object in such a way as to be elastically compressible.

For example, in Fig. 31, the first connecting part 201, used for rotatable connection, of the backrest module 20 at the left side is located at a side, remote from the center of the base plate 10, of the second connecting part 202 used for elastic connection; and the first connecting part 201, used for rotatable connection, of the backrest module 20 at the right side is located at a side, remote from the center of the base plate 10, of the second connecting part 202 used for elastic connection. Moreover, the second connecting part 202 of the backrest module 20 at the left side is connected to the base plate 10 via a compressible spring, and the second connecting part 202 of the backrest module 20 at the right side is connected to the base plate 10 via a compressible spring, in order to achieve a better motor vehicle collision protection effect through the compressible springs and the elastic base plate 10.

In some embodiments of the present application, for example in an embodiment in which the first connecting part 201 of at least one backrest module 20 is rotatably connected to the first object and the second connecting part 202 is elastically connected to the second object, the first connecting part 201 of at least one backrest module 20 is located at a side of the second connecting part 202 close to the center of the base plate 10, and the second connecting part 202 is connected to the second object in such a way as to be elastically stretchable.

For example, in Fig. 32, the first connecting part 201, used for rotatable connection, of the backrest module 20 at the left side is located at a side, close to the center of the base plate 10, of the second connecting part 202 used for elastic connection; and the first connecting part 201, used for rotatable connection, of the backrest module 20 at the right side is located at a side, close to the center of the base plate 10, of the second connecting part 202 used for elastic connection. Moreover, the second connecting part 202 of the backrest module 20 at the left side is connected to the base plate 10 via a stretchable spring, and the second connecting part 202 of the backrest module 20 at the right side is connected to the base plate 10 via a stretchable spring, in order to achieve a better motor vehicle collision protection effect through the stretchable springs and the elastic base plate 10.

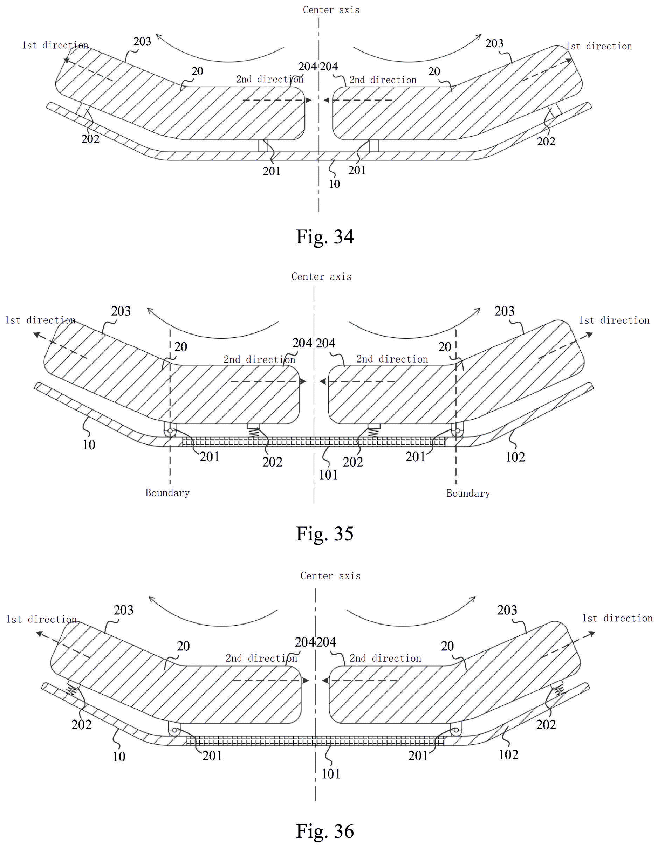

It should be noted that the manner of connection of the backrest modules 20 to the base plate 10 is not limited to this. For example, referring to Fig. 33, Fig. 33 shows another sectional schematic drawing of the positions of connection of the backrest modules 20 to the base plate 10 in embodiments of the present application, wherein the first connecting part 201 and the second connecting part 202 may also be both elastically connected to the base plate 10. As another example, referring to Fig. 34, Fig. 34 shows another sectional schematic drawing of the positions of connection of the backrest modules 20 to the base plate 10 in embodiments of the present application, wherein the first connecting part 201 and the second connecting part 202 may also be both rigidly connected to the base plate 10.

In some embodiments of the present application, the first connecting part 201 of at least one backrest module 20 is connected to the rigid region 102 of the base plate 10, and the second connecting part 202 is connected to the elastic region 101 of the base plate 10.

For example, referring to Fig. 35, Fig. 35 shows another sectional schematic drawing of the positions of connection of the backrest modules 20 to the base plate 10 in embodiments of the present application, wherein the first connecting part 201 of the backrest module 20 at the left side is connected to the rigid region 102 at a left-side edge of the base plate 10, and the second connecting part 202 of the backrest module 20 at the left side is connected to the elastic region 101 at the center of the base plate 10. The first connecting part 201 of the backrest module 20 at the right side is connected to the rigid region 102 at a right-side edge of the base plate 10, and the second connecting part 202 of the backrest module 20 at the right side is connected to the elastic region 101 at the center of the base plate 10. When the elastic region 101 at the center of the base plate 10 experiences depression deformation, the backrest module 20 at the left side and the backrest module 20 at the right side can both be deflected toward the center of the base plate 10, so as to envelop the user's back.

In some embodiments of the present application, the first connecting part 201 of at least one backrest module 20 is connected to the rigid region 102 of the base plate 10, and the second connecting part 202 is connected to the rigid region 102 of the base plate 10.

For example, referring to Fig. 36, Fig. 36 shows another sectional schematic drawing of the positions of connection of the backrest modules 20 to the base plate 10 in embodiments of the present application, wherein the first connecting part 201 of the backrest module 20 at the left side is connected to the rigid region 102 at the left side of the base plate 10, and the second connecting part 202 of the backrest module 20 at the left side is connected to the rigid region 102 at a left-side edge of the base plate 10. The first connecting part 201 of the backrest module 20 at the right side is connected to the rigid region 102 at the right side of the base plate 10, and the second connecting part 202 of the backrest module 20 at the right side is connected to the rigid region 102 at a right-side edge of the base plate 10. When the left and right sides of the base plate 10 are subjected to a pulling force by the second connecting parts 202 of the left-side backrest module 20 and the right-side backrest module 20, the elastic region 101 at the center of the base plate 10 experiences depression deformation, and the backrest module 20 at the left side and the backrest module 20 at the right side can both be deflected toward the center of the base plate 10, so as to envelop the user's back.

In some embodiments of the present application, the first connecting part 201 of at least one backrest module 20 is connected to the elastic region 101 of the base plate 10, and the second connecting part 202 is connected to the elastic region 101 of the base plate 10.

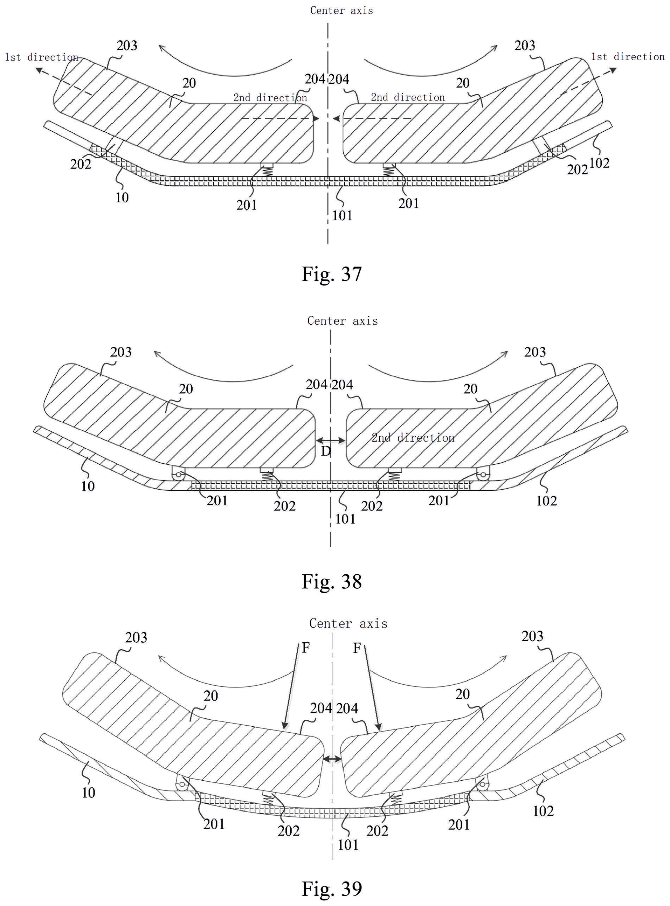

For example, referring to Fig. 37, Fig. 37 shows another sectional schematic drawing of the positions of connection of the backrest modules 20 to the base plate 10 in embodiments of the present application, wherein the first connecting part 201 of the backrest module 20 at the left side is connected to the elastic region 101 close to the center of the base plate 10, and the second connecting part 202 of the backrest module 20 at the left side is connected to the elastic region 101 close to a left-side edge of the base plate 10. The first connecting part 201 of the backrest module 20 at the right side is connected to the elastic region 101 close to the center of the base plate 10, and the second connecting part 202 of the backrest module 20 at the right side is connected to the elastic region 101 close to a right-side edge of the base plate 10. When the elastic region 101 at the center of the base plate 10 experiences depression deformation, the backrest module 20 at the left side and the backrest module 20 at the right side can both be deflected toward the center of the base plate 10, so as to envelop the user's back.

In some embodiments of the present application, the first connecting part 201 of at least one backrest module 20 is rotatably connected to the base plate 10, and the second connecting part 202 is elastically connected to the base plate 10.

For example, in Fig. 35, the first connecting part 201 of the backrest module 20 at the left side is rotatably connected to the rigid region 102 at a left-side edge of the base plate 10, and the second connecting part 202 of the backrest module 20 at the left side is elastically connected to the elastic region 101 at the center of the base plate 10. The first connecting part 201 of the backrest module 20 at the right side is rotatably connected to the rigid region 102 at a right-side edge of the base plate 10, and the second connecting part 202 of the backrest module 20 at the right side is elastically connected to the elastic region 101 at the center of the base plate 10. When the elastic region 101 at the center of the base plate 10 experiences depression deformation, the backrest module 20 at the left side and the backrest module 20 at the right side can both be deflected toward the center of the base plate 10 by means of the first connecting part 201, thereby achieving a larger deflection angle.

As another example, in Fig. 36, the first connecting part 201 of the backrest module 20 at the left side is rotatably connected to the rigid region 102 at the left side of the base plate 10, and the second connecting part 202 of the backrest module 20 at the left side is elastically connected to the rigid region 102 at a left-side edge of the base plate 10. The first connecting part 201 of the backrest module 20 at the right side is rotatably connected to the rigid region 102 at the right side of the base plate 10, and the second connecting part 202 of the backrest module 20 at the right side is elastically connected to the rigid region 102 at a right-side edge of the base plate 10. When the left and right sides of the base plate 10 are subjected to a pulling force by the second connecting parts 202 of the left-side backrest module 20 and the right-side backrest module 20, the elastic region 101 at the center of the base plate 10 experiences depression deformation, and the backrest module 20 at the left side and the backrest module 20 at the right side can both be deflected toward the center of the base plate 10 by means of the first connecting part 201, thereby achieving a larger deflection angle.

It should be noted that the above descriptions relating to the connection of the first connecting part 201 and the second connecting part 202 of the backrest module 20 to the rigid region 102 and elastic region 101 of the base plate 10 are mere exemplary embodiments, and those skilled in the art could make equivalent modified designs according to the specific layout of the rigid region 102 and the elastic region 101 of the base plate 10 (e.g. the layouts of the rigid region 102 and the elastic region 101 of the base plate 10 shown in Figs. 2 - 9).

In some embodiments of the present application, when the multiple backrest modules 20 are in a free state, a gap of a preset width is present between at least two adjacent backrest modules 20.

For example, referring to Fig. 38, Fig. 38 shows a sectional schematic drawing of the positions of connection of the backrest modules 20 to the base plate 10 when the multiple backrest modules 20 are in a free state in embodiments of the present application. Neither the backrest module 20 at the left side nor the backrest module 20 at the right side is subjected to an action force; at this time, the backrest module 20 at the left side and the backrest module 20 at the right side are in a free state, and a gap of width D is present between the backrest module 20 at the left side and the backrest module 20 at the right side, in order to provide a gap for deflection of the backrest module 20 at the left side and the backrest module 20 at the right side. This not only enables the backrest module 20 at the left side and the backrest module 20 at the right side to adjust their attitudes to adapt to the backrest curves of the user, but also makes it possible to meet the requirement for a larger angle of deflection of the backrest module 20 at the left side and the backrest module 20 at the right side in the event of a motor vehicle collision.

In some embodiments of the present application, when the multiple backrest modules 20 are under pressure, at least a partial region of the base plate 10 is depressed in a direction away from the multiple backrest modules 20. At least one backrest module 20 adjusts its attitude as the base plate 10 is depressed, and the gap between at least two adjacent backrest modules 20 decreases as the depth of depression of the base plate 10 increases.

For example, referring to Fig. 39, Fig. 39 shows a sectional schematic drawing of the positions of connection of the backrest modules 20 to the base plate 10 when the multiple backrest modules 20 are under pressure in embodiments of the present application. The second support parts 204 of the backrest module 20 at the left side and the backrest module 20 at the right side are both subjected to an action force F; the action force F may be but is not limited to a force applied to the seat by the back when the user is riding normally, when the motor vehicle brakes, or when the motor vehicle is involved in a collision. Under the action of the second connecting parts 202 of the backrest module 20 at the left side and the backrest module 20 at the right side, the elastic region 101 at the center of the base plate 10 is depressed in a direction away from the multiple backrest modules 20, the backrest module 20 at the left side rotates clockwise about the point of rotational connection of the first connecting part 201, and the backrest module 20 at the right side rotates anticlockwise about the point of rotational connection of the first connecting part 201. At the same time, the gap between the backrest module 20 at the left side and the backrest module 20 at the right side decreases as the depth of depression of the base plate 10 increases.

It will be understood that the gap between two adjacent backrest modules 20 can be set by those skilled in the art according to actual needs (e.g. user ride experience, motor vehicle collision protection, etc.), and the present application imposes no specific restrictions.

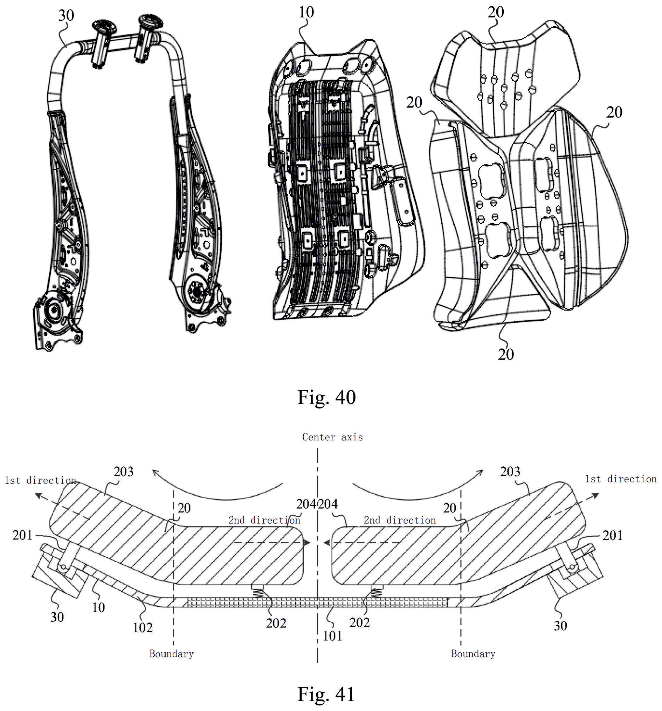

In some embodiments of the present application, referring to Fig. 40, Fig. 40 shows another exploded schematic drawing of the seat backrest in embodiments of the present application, wherein the seat backrest further comprises a backrest frame 30, the base plate 10 being fixed to the backrest frame 30.

It should be explained that the backrest frame 30 can provide rigid support for the base plate 10, so that the structural strength of the seat backrest meets requirements. In general, the backrest frame 30 can fix an edge region of the base plate 10. If the edge region of the base plate 10 is the rigid region 102, the rigid region 102 of the base plate 10 is fixedly connected to the backrest frame 30. However, there is no limitation to this. For example, if the entire region of the base plate 10 is the elastic region 101, fixing an edge region of the base plate 10 with the backrest frame 30 can also meet the requirements for the overall structural strength of the seat backrest. As another example, the backrest frame 30 could also fix the elastic region 101 in the middle of the base plate 10.

Those skilled in the art will understand that, if the rigid region 102 of the base plate 10 has sufficient strength or the base plate 10 itself meets the requirements for structural strength of the seat backrest, for example if a rigid frame forms the rigid region 102 in an edge region of the base plate 10, the backrest frame 30 is not a structural member that is required by the seat backrest.

In some embodiments of the present application, for example in an embodiment in which either the first object connected to the first connecting part 201 or the second object connected to the second connecting part 202 is the backrest frame 30, the first connecting part 201 of at least one backrest module 20 may be connected to the backrest frame 30, and the second connecting part 202 may be connected to the elastic region 101 or the rigid region 102 of the base plate 10. That is to say, the backrest module 20 may be partially connected to the backrest frame 30, with another part being connected to the base plate 10.

In some embodiments of the present application, the first connecting part 201 of at least one backrest module 20 is rotatably connected to the backrest frame 30, and the second connecting part 202 is elastically connected to the elastic region 101 of the base plate 10.

For example, referring to Fig. 41, Fig. 41 shows a sectional schematic drawing of the positions of connection of the backrest modules 20 to the base plate 10 and the backrest frame 30 in embodiments of the present application, wherein the first connecting part 201 of the backrest module 20 at the left side is rotatably connected to a left side of the backrest frame 30, and the second connecting part 202 of the backrest module 20 at the left side is elastically connected to the elastic region 101 at the center of the base plate 10. The first connecting part 201 of the backrest module 20 at the right side is rotatably connected to a right side of the backrest frame 30, and the second connecting part 202 of the backrest module 20 at the right side is elastically connected to the elastic region 101 at the center of the base plate 10. When the elastic region 101 at the center of the base plate 10 experiences depression deformation, the backrest module 20 at the left side and the backrest module 20 at the right side can both be deflected toward the center of the base plate 10 by means of the first connecting part 201, thereby achieving a larger deflection angle.

In some embodiments of the present application, the first connecting part 201 of at least one backrest module 20 is elastically connected to the backrest frame 30, and the second connecting part 202 is rotatably connected to the elastic region 101 of the base plate 10.

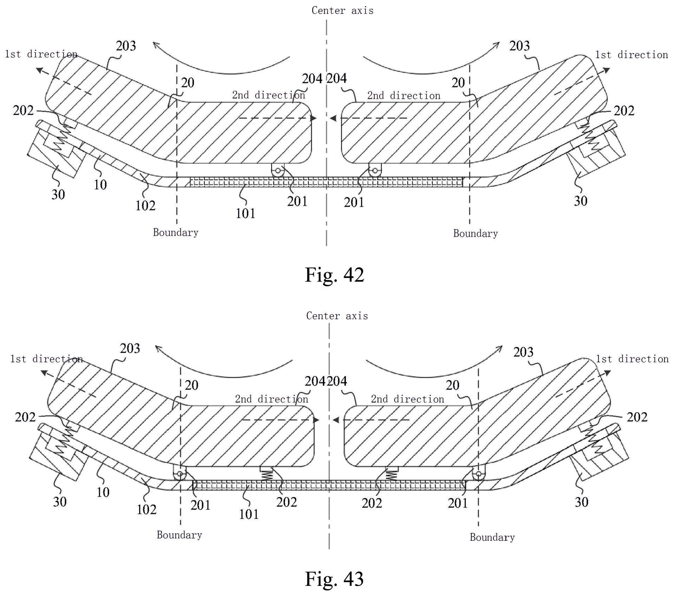

For example, referring to Fig. 42, Fig. 42 shows another sectional schematic drawing of the positions of connection of the backrest modules 20 to the base plate 10 and the backrest frame 30 in embodiments of the present application, wherein the first connecting part 201 of the backrest module 20 at the left side is rotatably connected to the elastic region 101 at the center of the base plate 10, and the second connecting part 202 of the backrest module 20 at the left side is elastically connected to a left side of the backrest frame 30. The first connecting part 201 of the backrest module 20 at the right side is rotatably connected to the elastic region 101 at the center of the base plate 10, and the second connecting part 202 of the backrest module 20 at the right side is elastically connected to a right side of the backrest frame 30. When the elastic region 101 at the center of the base plate 10 experiences depression deformation, the backrest module 20 at the left side and the backrest module 20 at the right side can both be deflected toward the center of the base plate 10 by means of the first connecting part 201.

It should be noted that the above descriptions relating to the connection of the first connecting part 201 and the second connecting part 202 of the backrest module 20 to the rigid region 102 and elastic region 101 of the base plate 10 or to the backrest frame 30 are mere exemplary embodiments, and there is actually no limitation to this. For example, referring to Fig. 43, Fig. 43 shows another sectional schematic drawing of the positions of connection of the backrest modules to the base plate 10 and the backrest frame 30 in embodiments of the present application, wherein the backrest module 20 could also be provided with one first connecting part 201 and two second connecting parts 202. The first connecting part 201 is rotatably connected to the rigid region 102 of the base plate 10; the two second connecting parts 202 are elastically connected to the backrest frame 30 and the elastic region 101 of the base plate 10 respectively.

In some embodiments of the present application, at least a portion of the rigid region 102 of the base plate 10 is fixedly connected to the backrest frame 30, to provide rigid support for the base plate 10 via the backrest frame 30.

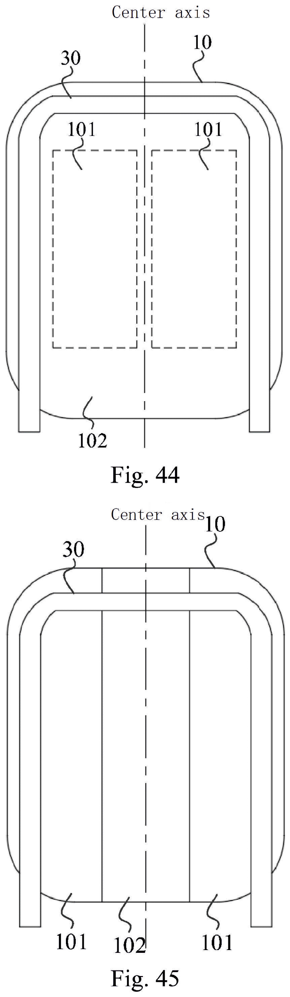

For example, referring to Fig. 44, Fig. 44 shows a structural schematic drawing of the backrest frame 30 and the elastic base plate 10 in embodiments of the present application, wherein two elastic regions 101 are provided at the center of the base plate 10, and an edge region of the base plate 10 is the rigid region 102. The rigid region 102 at left, right and upper sides of the base plate 10 may be fixed to the backrest frame 30.

In some embodiments of the present application, at least a portion of the elastic region 101 of the base plate 10 is fixedly connected to the backrest frame 30, to provide rigid support for the base plate 10 via the backrest frame 30.

For example, referring to Fig. 45, Fig. 45 shows another structural schematic drawing of the backrest frame 30 and the elastic base plate 10 in embodiments of the present application, wherein two elastic regions 101 are provided at left and right sides of the base plate 10, and a center axis region of the base plate 10 is the rigid region 102. Edges of the elastic regions 101 at the left and right sides of the base plate 10 may be fixed to the backrest frame 30.

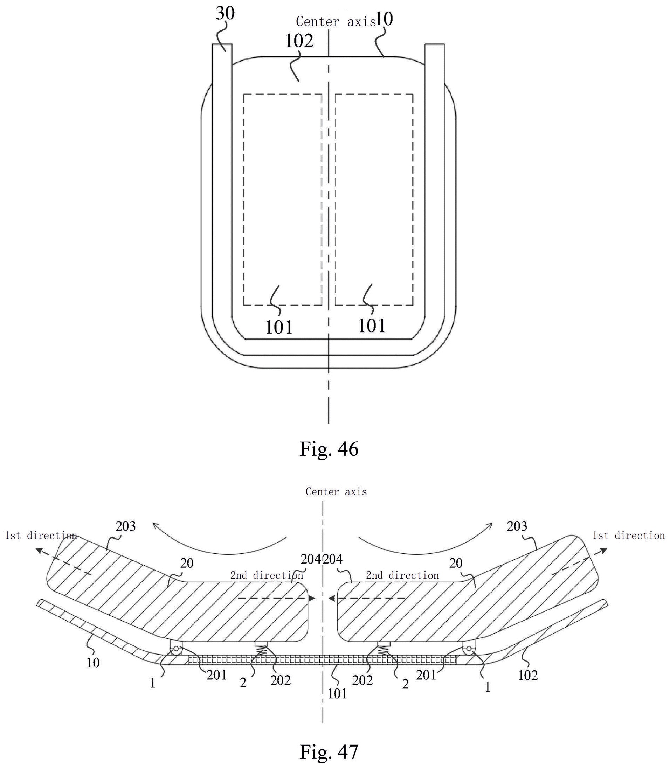

Those skilled in the art will understand that the shape of the backrest frame 30 and the region of fixing of the backrest frame to the base plate 10 are not limited to the embodiments above. For example, referring to Fig. 46, Fig. 46 shows another structural schematic drawing of the backrest frame 30 and the elastic base plate 10 in embodiments of the present application. The backrest frame 30 could also be U-shaped, and the rigid region 102 at left, right and lower sides of the base plate 10 may be fixed to the backrest frame 30.

In some embodiments of the present application, a first hinge connection component 1 is connected between the first connecting part 201 of at least one backrest module 20 and the first object, and a first elastic component 2 is connected between the second connecting part 202 and the second object.

For example, referring to Fig. 47, Fig. 47 shows another sectional schematic drawing of the positions of connection of the backrest modules 20 to the base plate 10 in embodiments of the present application, wherein the first connecting part 201 of the backrest module 20 at the left side is connected to the rigid region 102 at a left-side edge of the base plate 10 via the first hinge connection component 1, and the second connecting part 202 of the backrest module 20 at the left side is connected to the elastic region 101 at the center of the base plate 10 via the first elastic component 2. The first connecting part 201 of the backrest module 20 at the right side is connected to the rigid region 102 at a right-side edge of the base plate 10 via the first hinge connection component 1, and the second connecting part 202 of the backrest module 20 at the right side is connected to the elastic region 101 at the center of the base plate 10 via the first elastic component 2. When the elastic region 101 at the center of the base plate 10 experiences depression deformation, the backrest module 20 at the left side and the backrest module 20 at the right side can both be deflected toward the center of the base plate 10 by means of the first hinge connection component 1 and the first elastic component 2.

In some embodiments of the present application, the first hinge connection component 1 is connected between the first connecting part 201 of at least one backrest module 20 and the first object, and a second hinge connection component 3 is connected between the second connecting part 202 and the second object.

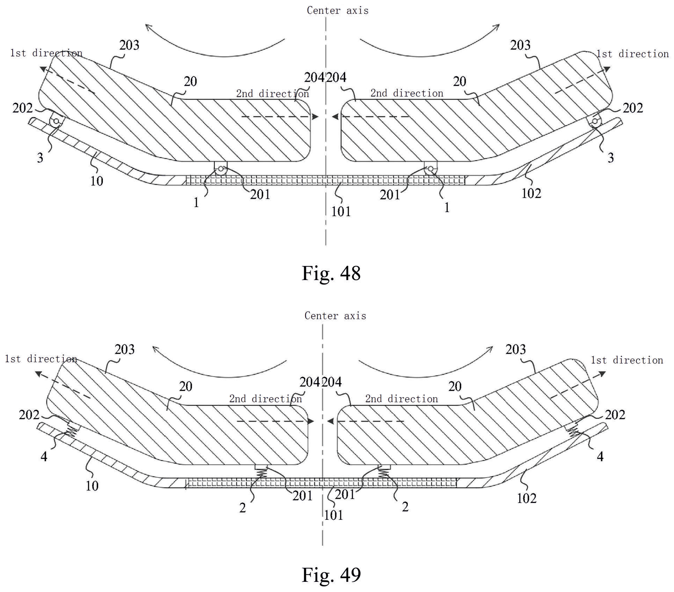

For example, referring to Fig. 48, Fig. 48 shows another sectional schematic drawing of the positions of connection of the backrest modules 20 to the base plate 10 in embodiments of the present application, wherein the first connecting part 201 of the backrest module 20 at the left side is connected to the elastic region 101 at the left side of the center axis of the base plate 10 via the first hinge connection component 1, and the second connecting part 202 of the backrest module 20 at the left side is connected to the rigid region 102 at a left-side edge of the base plate 10 via the second hinge connection component 3. The first connecting part 201 of the backrest module 20 at the right side is connected to the elastic region 101 at the right side of the center axis of the base plate 10 via the first hinge connection component 1, and the second connecting part 202 of the backrest module 20 at the right side is connected to the rigid region 102 at a right-side edge of the base plate 10 via the second hinge connection component 3. When the elastic region 101 at the center of the base plate 10 experiences depression deformation, the first hinge connection components 1 of the backrest module 20 at the left side and the backrest module 20 at the right side sink as the base plate 10 is depressed, and the backrest module 20 at the left side and the backrest module 20 at the right side can both be deflected toward the center of the base plate 10 by means of the first hinge connection component 1 and the second hinge connection component 3.

In some embodiments of the present application, the first elastic component 2 is connected between the first connecting part 201 of at least one backrest module 20 and the first object, and a second elastic component 4 is connected between at least one second connecting part 202 and the second object.

For example, referring to Fig. 49, Fig. 49 shows another sectional schematic drawing of the positions of connection of the backrest modules 20 to the base plate 10 in embodiments of the present application, wherein the first connecting part 201 of the backrest module 20 at the left side is connected to the elastic region 101 at the left side of the center axis of the base plate 10 via the first elastic component 2, and the second connecting part 202 of the backrest module 20 at the left side is connected to the rigid region 102 at a left-side edge of the base plate 10 via the second elastic component 4. The first connecting part 201 of the backrest module 20 at the right side is connected to the elastic region 101 at the right side of the center axis of the base plate 10 via the first elastic component 2, and the second connecting part 202 of the backrest module 20 at the right side is connected to the rigid region 102 at a right-side edge of the base plate 10 via the second elastic component 4. When the elastic region 101 at the center of the base plate 10 experiences depression deformation, the first elastic components 2 of the backrest module 20 at the left side and the backrest module 20 at the right side sink as the base plate 10 is depressed, and the backrest module 20 at the left side and the backrest module 20 at the right side can both be deflected toward the center of the base plate 10 by means of the first elastic component 2, the second elastic component 4 and depression deformation of the base plate 10.

For example, the first hinge connection component 1 and the second hinge connection component 3 may include but are not limited to structural members for rotatable connection such as ball joints and hinges; the first elastic component 2 and the second elastic component 4 may include but are not limited to spring or rubber members.

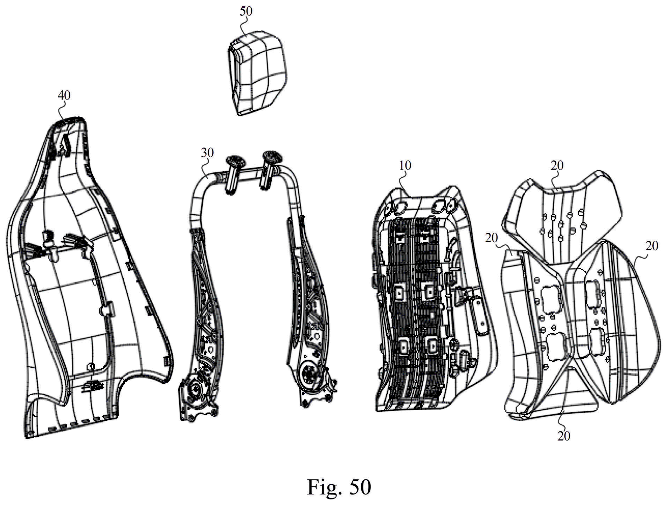

It should be noted that the above content relating to the seat backrest is intended to clearly explain the process of implementation and verification of the present application. Guided by the present application, those skilled in the art could make equivalent modified designs or further designs. For example, the shape and layout of the multiple backrest modules 20 may be modified according to user experience requirements. As another example, the positions of fixing parts on the base plate 10 may be adjusted adaptively according to the shape and layout of the multiple backrest modules 20. As another example, the configuration of the elastic region 101 and the rigid region 102 on the base plate 10 may be adjusted adaptively according to the shape and layout of the multiple backrest modules 20. As another example, referring to Fig. 50, Fig. 50 shows another exploded schematic drawing of the seat backrest in embodiments of the present application, wherein the seat backrest may further comprise a protective shell 40 and a headrest 50 which is fixed to the backrest frame 30. The protective shell 40 prevents exposure of the structure of the backrest frame 30, thus making the seat aesthetically pleasing. The headrest 50 can offer head support for the user, making the seat more comfortable.

Further, to implement the seat backrest in embodiments of the present application more effectively, the present application also provides an automotive seat based on the seat backrest, the automotive seat comprising the seat backrest of any one of the embodiments above. Since the automotive seat in embodiments of the present application is provided with the seat backrest of the above embodiments, it has all of the beneficial effects of the seat backrest described above, which are not repeated here.

Further, to implement the automotive seat in embodiments of the present application more effectively, the present application also provides a motor vehicle based on the automotive seat, the motor vehicle comprising the automotive seat of the above embodiments. For example, the motor vehicle may be but is not limited to an internal combustion engine vehicle, a battery electric vehicle, a hybrid electric vehicle, a plug-in hybrid electric vehicle, a range-extended electric vehicle or a fuel cell electric vehicle. Since the automotive seat of the motor vehicle in embodiments of the present application is provided with the seat backrest of the above embodiments, it has all of the beneficial effects of the seat backrest described above, which are not repeated here.

The description of each of the embodiments above has its own emphasis; for any part not described in detail in a particular embodiment, the detailed description of another embodiment above can be referred to, and this is not repeated here.

Basic concepts have been described above; clearly, to a person skilled in the art, the detailed disclosure above merely serves as examples and does not constitute a limitation of the present application. Although not explicitly explained here, those skilled in the art could make various amendments, improvements and corrections to the present application. Such amendments, improvements and corrections are recommended in the present application, so still fall within the spirit and scope of demonstrative embodiments of the present application.

Moreover, the present application has used specific wording to describe embodiments of the present application. For example, "an embodiment", "one embodiment" and/or "some embodiments" refer to a particular feature, structure or characteristic associated with at least one embodiment of the present application. Thus, it should be emphasized and noted that "one embodiment" or "an embodiment" or "an alternative embodiment" mentioned twice or more in different places herein does not necessarily refer to the same embodiment. In addition, certain features, structures or characteristics in one or more embodiments of the present application can be suitably combined.

By the same principle, it should be noted that to simplify presentation of the disclosure of the present application and thus assist understanding of one or more invention embodiments, in the description of embodiments of the present application above, multiple features may sometimes be merged in a single embodiment, drawing or description thereof. However, such a method of disclosure does not mean that the object of the present application requires more features than are mentioned in the claims. In fact, the features of embodiments are fewer than all features of a single embodiment disclosed above.

The seat backrest, automotive seat and motor vehicle provided in embodiments of the present application have been presented in detail above. Specific examples have been used herein to expound the principles and embodiments of the present invention. The description of embodiments above is merely intended to assist understanding of the method of the present invention and the core ideas thereof. Moreover, those skilled in the art could make changes to the specific manner of implementation and application scope based on the ideas of the present invention. In summary, the content herein should not be construed as limiting the present invention.

### List of References

- 1: first hinge connection component
- 2: first elastic component
- 3: second hinge connection component
- 4: second elastic component
- 10: base plate
- 11: first through-slot
- 12: first groove
- 13: second through-slot
- 14: elastic member
- 20: backrest module
- 21: first side wing support module
- 22: second side wing support module
- 23: first end support module
- 24: second end support module
- 30: backrest frame
- 40: protective shell
- 50: headrest
- 101: elastic region
- 102: rigid region
- 201: first connecting part
- 202: second connecting part
- 203: first support part
- 204: second support part
- 210: backrest support plates
- 211: first side wing secondary support module
- 220: backrest foam body
- 221: second side wing secondary support module
- 1011: first elastic region
- 1012: second elastic region
- 1021: first rigid region
- 1022: second rigid region

- F, F1 - F4: action force

## Claims

1. A seat backrest, **characterized by** comprising:
a base plate (10);
multiple backrest modules (20), mounted on the base plate (10) and combined to form a seat backrest support;
wherein at least a portion of the base plate (10) is elastic, and at least one of the backrest modules (20) adjusts its attitude as the base plate (10) deforms elastically.

2. The seat backrest as claimed in claim 1, **characterized in that** at least a partial region of the base plate (10) can be depressed in a direction away from the multiple backrest modules (20), with at least one of the backrest modules (20) adjusting its attitude as the base plate (10) is depressed.

3. The seat backrest as claimed in claim 1 or 2, **characterized in that** when the multiple backrest modules (20) are in a free state, a gap of a preset width is present between at least two adjacent said backrest modules (20).

4. The seat backrest as claimed in any one of the preceding claims, **characterized in that** the base plate (10) has at least one elastic region (101, 1011) and at least one rigid region (102);
any said elastic region (101, 1011) has a smaller elastic modulus than any said rigid region (102).

5. The seat backrest as claimed in claim 4, **characterized in that** at least one of the backrest modules (20) has at least one first connecting part (201) and at least one second connecting part (202);
at least one said first connecting part (201) is connected to a first object, and at least one said second connecting part (202) is connected to a second object;
wherein at least one of the first object and the second object is the elastic region (101, 1011) or the rigid region (102) of the base plate (10).

6. The seat backrest as claimed in claim 5, **characterized in that** the first connecting part (201) of at least one of the backrest modules (20) is rotatably connected to the first object, and the second connecting part (202) is elastically connected to the second object.

7. The seat backrest as claimed in claim 6, **characterized in that** at least one of the backrest modules (20) comprises a first support part (203) and a second support part (204);
the first support part (203) extends in a first direction, and the second support part (204) extends in a second direction;
wherein the first direction is not parallel to the second direction, and the first connecting part (201) used for rotatable connection is located at a boundary between the first support part (203) and the second support part (204).

8. The seat backrest as claimed in any one of the claims 5 to 7, **characterized in that** the first connecting part (201) of at least one of the backrest modules (20) is connected to the rigid region (102) of the base plate (10), and the second connecting part (202) is connected to the elastic region (101, 1011) of the base plate (10),
or the first connecting part (201) of at least one of the backrest modules (20) is connected to the rigid region (102) of the base plate (10), and the second connecting part (202) is connected to the rigid region (102) of the base plate (10), or the first connecting part (201) of at least one of the backrest modules (20) is connected to the elastic region (101, 1011) of the base plate (10), and the second connecting part (202) is connected to the elastic region (101, 1011) of the base plate (10).

9. The seat backrest as claimed in claim 8, **characterized in that** the first connecting part (201) of at least one of the backrest modules (20) is rotatably connected to the base plate (10), and the second connecting part (202) is elastically connected to the base plate (10).

10. The seat backrest as claimed in claim 5, **characterized in that** the seat backrest further comprises a backrest frame (30), the base plate (10) being fixed to the backrest frame (30);
the first connecting part (201) of at least one of the backrest modules (20) is connected to the backrest frame (30), and the second connecting part (202) is connected to the elastic region (101, 1011) or the rigid region (102) of the base plate (10).

11. The seat backrest as claimed in claim 5, **characterized in that** a first hinge connection component is connected between the first connecting part (201) of at least one of the backrest modules (20) and the first object, and a first elastic component is connected between the second connecting part (202) and the second object,
or a first hinge connection component is connected between the first connecting part (201) of at least one of the backrest modules (20) and the first object, and a second hinge connection component is connected between the second connecting part (202) and the second object
or a first elastic component is connected between the first connecting part (201) of at least one of the backrest modules (20) and the first object, and a second elastic component is connected between at least one said second connecting part (202) and the second object.

12. The seat backrest as claimed in claim 4, **characterized in that** the base plate (10) has a first elastic region (1011) and a second elastic region (1012);
the first elastic region (1011) and the second elastic region (1012) are respectively located at two sides of a center axis of the base plate (10).

13. The seat backrest as claimed in claim 4, **characterized in that** the base plate (10) has a first rigid region (1021) and a first elastic region (1011);
the first rigid region (1021) is arranged along an edge of the base plate (10) and surrounds the first elastic region (1011).

14. The seat backrest as claimed in claim 4, **characterized in that** the elastic region (101, 1011) of the base plate (10) is provided with multiple first through-slots penetrating the base plate (10),
or **characterized in that** the elastic region (101, 1011) of the base plate (10) is provided with multiple first grooves,
or **characterized in that** the elastic region (101, 1011) of the base plate (10) is provided with a second through-slot (13) corresponding in size to the elastic region (101, 1011), and multiple elastic members (14) are mounted in the second through-slot (13).

15. The seat backrest as claimed in claim 1, **characterized in that** the multiple backrest modules (20) comprise a first side wing support module and a second side wing support module;
the first side wing support module and the second side wing support module are respectively mounted at two sides of a center axis of the base plate (10).

16. The seat backrest as claimed in claim 1, **characterized in that** the multiple backrest modules (20) comprise multiple first side wing secondary support modules and multiple second side wing secondary support modules;
wherein the multiple first side wing secondary support modules and the multiple second side wing secondary support modules are respectively mounted at two sides of a center axis of the base plate (10).

17. The seat backrest as claimed in claim 15 or 16, **characterized in that** the multiple backrest modules (20) further comprise a first end support module (23);
the first end support module (23) is mounted at a first end of the base plate (10) in the direction of the center axis.

18. The seat backrest as claimed in claim 15 or 16, **characterized in that** the multiple backrest modules (20) further comprise a second end support module (24);
the second end support module (24) is mounted at a second end of the base plate (10) in the direction of the center axis.

19. The seat backrest as claimed in claim 1, **characterized in that** each of the backrest modules (20) comprises a backrest support plate (210).

20. The seat backrest as claimed in claim 1, **characterized in that** each of the backrest modules (20) comprises a backrest support plate (210) and a backrest foam body (220), the backrest foam body (220) being mounted on a side of the backrest support plate (210) that faces away from the base plate (10).
